# EUROPÄISCHE PATENTSCHRIFT

(11) **EP 4 111 077 B1**
(45) Veröffentlichungstag und Bekanntmachung des Hinweises auf die Patenterteilung: **23.08.2023**
(21) Anmeldenummer: 21710212.8
(22) Anmeldetag: 02.03.2021
(51) Int. Cl.: F16H 25/20

(54) **LINEARSYSTEM FÜR EINE FERTIGUNGSANLAGE UND VERFAHREN ZUR MONTAGE SOLCH EINES LINEARSYSTEMS**
LINEAR SYSTEM FOR A PRODUCTION FACILITY AND METHOD FOR INSTALLING A LINEAR SYSTEM OF THIS KIND
SYSTÈME LINÉAIRE POUR INSTALLATION DE PRODUCTION ET PROCÉDÉ D'INSTALLATION DE SYSTÈME LINÉAIRE DE CE TYPE

(30) Priorität: 03.03.2020 DE 102020105709
(43) Veröffentlichungstag der Anmeldung: 04.01.2023
(73) Patentinhaber: FERTIG Motors GmbH, 97828 Marktheidenfeld (DE)
(72) Erfinder: WUERL, Konrad, 97084 Würzburg (DE)
(74) Vertreter: Patentanwaltskanzlei WILHELM & BECK
(86) Internationale Anmeldenummer: PCT/EP2021/055183
(87) Internationale Veröffentlichungsnummer: WO 2021/175854

(56) Entgegenhaltungen:
- DE-A1-102018 201 722
- DE-A1-102018 209 543
- DE-U1-202014 103 629
- US-A1- 2016 186 844

## Beschreibung

Die Erfindung betrifft ein Linearsystem für eine Fertigungsanlage und ein Verfahren zur Montage solche eines Linearsystems.

Es sind Linearsysteme mit einem Antriebsmotor, einer Spindel und einer Spindelmutter bekannt, wobei der Antriebsmotor die Spindelmutter antreibt und die Spindelmutter die Spindel in einer Axialrichtung verschiebt. Mittels des Linearsystems kann eine rotatorische Bewegung des Antriebsmotors in eine axiale Bewegung der Spindel umgesetzt werden, um in einer Fertigungsanlage bestimmte Komponenten entlang einer Achse zu bewegen. Die Fertigungsanalage kann dabei voll automatisiert sein und mit einem Datennetz verbunden sein, um die einzelnen Komponenten, beispielsweise das Linearsystem, anzusteuern. Um eine Verdrehung der Spindel bei Rotation der Spindelmutter an der Spindel zu verhindern, weist das Linearsystem eine Linearführung auf.

So ist beispielsweise aus DE 10 2013 216 881 A1 ein Linearantrieb mit einem sich in Richtung einer Längsachse erstreckenden Gehäuse und einer darin um die Längsachse drehbar aufgenommenen Gewindespindel, mit der eine im Gehäuse axial verschieblich aufgenommene Spindelmutter in Eingriff ist. Bei dieser Ausgestaltung ist ein Hub des Linearantriebs in Längsrichtung stark limitiert und ist daher nur für einfache Anwendungen in einer Fertigungsanlage einsetzbar. Wird der Linearantrieb mit einer senkrecht zur Längsachse wirkenden Kraft dauerhaft belastet tritt ein hoher Verschleiß an einer Hubstange und deren Lagerung auf.

Ferner ist aus DE 10 2018 201 722 A1 ein Linearsystem bekannt.

Es ist Aufgabe der Erfindung, ein verbessertes Linearsystem und ein verbessertes Verfahren zur Montage solche eines Linearsystems bereitzustellen.

Diese Aufgabe wird mittels eines Linearsystems für eine Fertigungsanlage gemäß Patentanspruch 1 und mittels eines Verfahrens gemäß Patentanspruch 14 gelöst. Vorteilhafte Ausführungsformen sind in den abhängigen Ansprüchen angegeben.

Es wurde erkannt, dass ein verbessertes Linearsystem für eine Fertigungsanlage dadurch bereitgestellt werden kann, dass das Linearsystem eine Linearführung, eine Antriebseinrichtung, eine Spindelmutter und eine Spindel aufweist, wobei sich die Spindel entlang einer Achse erstreckt. Auf der Spindel ist die Spindelmutter angeordnet und die Spindelmutter und die Spindel befinden sich in Eingriff. Die Antriebseinrichtung ist abtriebsseitig mit der Spindelmutter drehfest verbunden und ausgebildet, die Spindelmutter zur Rotation um die Achse anzutreiben, wobei die Spindelmutter ausgebildet ist, bei Rotation um die Achse die Spindel parallel zu der Achse zu bewegen. Die Spindel weist an einer ersten äußeren Umfangsseite eine sich parallel zu der Achse erstreckende erste Spindelnut auf. Die Linearführung weist ein drehfest angeordnetes Führungsgehäuse und ein erstes Leistenelement auf. Das Führungsgehäuse weist eine sich nach radial außen erstreckende erste Aufnahme auf. Das erste Leistenelement weist einen radial außen angeordneten Träger und eine radial innen zu dem Träger angeordnete und mit dem Träger verbundene und sich parallel zur Achse erstreckende Leiste auf. Das erste Leistenelement greift mit dem Träger in die erste Aufnahme des Führungsgehäuses und mit der Leiste in die erste Spindelnut ein und ist ausgebildet, die Spindel in einer Richtung parallel zu der Achse zu führen.

Eine zweite äußere Umfangsseite des Trägers und eine erste innere Umfangsseite der ersten Aufnahme sind zumindest abschnittsweise korrespondierend zueinander ausgebildet. Das Führungsgehäuse ist mittels eines Befestigungsmittels in einem Systemgehäuse des Linearsystems befestigt, wobei das Befestigungsmittel ausgebildet ist, eine parallel zur Achse wirkende Spannkraft in das Führungsgehäuse einzuleiten, um die erste innere Umfangsseite der ersten Aufnahme an die zweite äußere Umfangsseite anzupressen. Diese Ausgestaltung hat den Vorteil, dass der Träger in der ersten Aufnahme reibschlüssig befestigt wird und nach Befestigung eine radiale Verschiebung des ersten Leistenelements in radialer Richtung durch die reibschlüssige Verbindung unterbunden ist. Dadurch wird sichergestellt, dass der Eingriff der Leiste in der ersten Spindelnut über die Betriebsdauer des Linearsystems hinweg sichergestellt ist. Ferner ist diese Ausgestaltung besonders einfach vorzugsweise automatisiert montierbar.

Diese Ausgestaltung hat den Vorteil, dass ein besonders guter gleichmäßiger, formschlüssiger, vorzugsweise flächiger, Kontakt zwischen dem Leistenelement und der Spindel sichergestellt ist, sodass ein Verschleiß des ersten Leistenelements und/oder der Spindel stark reduziert ist. Ferner ist das Linearsystem dadurch besonders haltbar. Durch das Vorsehen und den Eingriff des ersten Leistenelements in die Spindelnut kann eine Gewindesteigung einer Gewindenut der Spindel unabhängig zum Spindeldurchmesser gewählt werden. Insbesondere kann die Gewindesteigung besonders klein (beispielsweise zwischen 2 bis 20 mm) gewählt werden. Dadurch kann die Spindel individuell auf den geplanten Einsatz des Linearsystems in der Fertigungsanlage angepasst werden, ohne dass hierfür die Linearführung anzupassen ist.

Ferner ist das Linearsystem unempfindlich gegenüber Fertigungs- und/oder Montagetoleranzen, sodass ein zuverlässiger Betrieb in der Fertigungsanlage sichergestellt ist und Wartungs- und/oder Ausfallzeiten der Fertigungsanlage minimiert sind.

Des Weiteren wird eine verspannungsfreie Ausrichtung der Spindel bereitgestellt. Dadurch wird hohe Funktionssicherheit des Linearsystems sichergestellt. Ferner hat die Leiste eine abstreifende Wirkung gegenüber Partikelmaterial, beispielsweise Stäuben und Verunreinigungen in der ersten Spindelnut, sodass die Linearführung ein Eindringen von Partikelmaterial in einen Gehäuseinnenraum des Linearsystems verhindert.

Ferner weist das Linearsystem einen besonders großen Hub in axialer Richtung der Achse auf. Die Spindel kann mit einer Kraft quer zur Achse dauerhaft belastet werden ohne dass hierdurch das Linearsystem einen Schaden nimmt. Insbesondere wird gegenüber einem Kugelspindeltrieb eine Überlastung von einzelnen Kugel vermieden. Dabei kann sowohl durch das Leistenelement die Kraft resultierend aus der Masse des Spindel aber auch aus einer zusätzlichen Last, beispielsweise einer weiteren Komponente abgestützt werden. Dadurch eignet sich diese Ausgestaltung insbesondere für Linearsysteme mit einem besonders großen Hub.

Ferner können durch das vorgeschlagene Linearsystem Fertigungstoleranzen z.B. ein Abstandsfehler und/oder eine Lage- und Fertigungstoleranz der Spindelnut ausgeglichen werden.

In einer weiteren Ausführungsform weist die Linearführung ein erstes Federelement auf. Das erste Leistenelement weist eine Gleitfläche auf einer der Spindel zugewandten Seite auf. Der Träger durchgreift die erste Aufnahme in radialer Richtung und ragt auf einer der Spindel abgewandten Seite aus der ersten Aufnahme hervor. Das erste Federelement ist zwischen einer Außenseite des Führungsgehäuses und einer Trägeraußenseite angeordnet. Das erste Federelement ist ausgebildet, das erste Leistenelement in der ersten Spindelnut derart zu positionieren, dass die Gleitfläche in einem vordefinierten dritten Abstand zu einem Spindelnutgrund der ersten Spindelnut in der ersten Spindelnut angeordnet ist.

Diese Ausgestaltung hat den Vorteil, dass eine Überbestimmung der Linearführung vermieden wird. Ferner wird eine Abstützung einer Radialkraft über die Leiste an der Spindel vermieden, sodass eine Hertzsche Pressung zwischen Leiste und Spindel gering ist. Dadurch ist ein Verschleiß an der Leiste minimiert, da die Leiste nur mit einer in Umfangsrichtung wirkenden Kraft belastet wird.

In einer weiteren Ausführungsform weist die Linearführung eine Führungshülse mit einer radial innenseitig angeordneten Führungsfläche auf, wobei die Führungshülse mit dem Systemgehäuse gekoppelt ist und die Spindel umgreift, wobei die Führungsfläche an der ersten äußeren Umfangsseite der Spindel anliegt und ausgebildet ist, eine in radialer Richtung wirkende Radialkraft aus der Spindel abzustützen. Diese Ausgestaltung hat den Vorteil, dass dadurch die Leiste an der Gleitfläche entlastet ist und nur Kräfte in Umfangsrichtung an der Gleitfläche wirken. Dadurch wird ein Verschleiß der an der Leiste sowie der Einfluss etwaiger Fertigungstoleranzen der Gewindespindel und des Leistenelementes minimiert.

In einer weiteren Ausführungsform weist die Linearführung ein erstes Federelement auf. Das erste Leistenelement weist eine Gleitfläche auf einer der Spindel zugewandten Seite auf. Das erste Federelement liegt an der Leiste des ersten Leistenelements außenseitig an. Das erste Federelement ist ausgebildet, die Leiste des ersten Leistenelements in der ersten Spindelnut derart zu halten, dass die Gleitfläche an der ersten Spindelnut anliegt. Diese Ausgestaltung hat den Vorteil, dass über die Gleitfläche die Radialkraft aus der Spindel auch über die Leiste abgestützt werden kann und auf eine weitere radiale Lagerung der Spindel verzichtet werden kann.

In einer weiteren Ausführungsform ist das erste Federelement ringförmig ausgebildet, wobei das erste Federelement auf einer der Spindel abgewandten Seite der Leiste des ersten Leistenelements angeordnet ist, wobei das erste Federelement die Spindel umfangsseitig umgreift und beabstandet zu der Spindel angeordnet ist. Diese Ausgestaltung hat den Vorteil, dass das erste Federelement besonders leicht auf dem ersten Leistenelement und der Spindel montiert werden kann.

In einer weiteren Ausführungsform weist die Linearführung eine in der ersten Aufnahme angeordnete, plattenartig ausgebildete Druckplatte auf, wobei die Druckplatte an einer der Achse zugewandten Seite eine konvex ausgebildete erste Anlagefläche und an einer der Achse abgewandten Seite eine angeordnete zweite Anlagefläche aufweist. Der Träger des ersten Leistenelements weist radial außen eine konkav ausgebildete zweite Anlagefläche auf. Die zweite Anlagefläche liegt an der ersten Anlagefläche an. Das Führungsgehäuse weist eine sich in radialer Richtung erstreckende erste Durchgangsöffnung und ein Fixierelement auf, wobei die erste Durchgangsöffnung in der ersten Aufnahme radial innenseitig mündet. Das Fixierelement ist in radialer Richtung in der ersten Durchgangsöffnung verstellbar angeordnet und liegt radial innenseitig an einer zweiten Anlagefläche der Druckplatte an. Diese Ausgestaltung hat den Vorteil, dass durch das Anliegen des Fixierelements an der Druckplatte und der Druckplatte an dem Träger sowie der Leiste des ersten Leistenelements in der ersten Spindelnut die Spindelnut spielfrei durch die Linearführung gehalten wird.

Vorteilhafterweise weist die Spindel an der ersten äußeren Umfangsseite eine sich parallel zu der Achse erstreckende zweite Spindelnut auf, wobei die zweite Spindelnut in Umfangsrichtung versetzt zu der ersten Spindelnut angeordnet ist. Die Linearführung weist wenigstens ein zweites Leistenelement und das Führungsgehäuse weist eine zweite Aufnahme auf. Die zweite Aufnahme erstreckt sich in radialer Richtung bezogen auf die Achse und ist in Umfangsrichtung versetzt zu der ersten Aufnahme angeordnet. Das zweite Leistenelement greift mit einer Leiste des zweiten Leistenelements in die zweite Spindelnut und mit einem Träger des zweiten Leistenelements in die zweite Aufnahme ein. Diese Ausgestaltung hat den Vorteil, dass eine besonders gute Führung der Spindel sichergestellt ist und zusätzlich die Spindel in radialer Richtung gelagert wird.

In einer weiteren Ausführungsform umgreift das erste Federelement die Spindel, das erste Leistenelement und das zweite Leistenelement. Dabei liegt das erste Federelement radial außen an der Leiste des zweiten Leistenelements an und sichert das zweite Leistenelement in der zweiten Spindelnut. Dadurch kann eine Bauteilanzahl geringgehalten werden.

Von besonderem Vorteil ist, wenn das erste Federelement als O-Ring ausgebildet ist und einen elastischen Werkstoff aufweist.

In einer weiteren Ausführungsform weist die Linearführung wenigstens ein zweites Federelement auf, wobei das zweite Federelement in einer Richtung parallel zu der Achse versetzt zu dem ersten Federelement angeordnet ist. Zwischen dem ersten Federelement und dem zweiten Federelement ist der Träger des ersten Leistenelements angeordnet. Das zweite Federelement umgreift die Spindel und liegt radial außen an der Leiste des ersten Leistenelements an. Das erste Federelement und das zweite Federelement sichern gemeinsam die Leiste des ersten Leistenelements in der ersten Spindelnut. Dadurch wird ein Verkippen der Leiste bei Montage der Spindel in der Linearführung vermieden, sodass das Linearsystem automatisiert montiert werden kann.

In einer weiteren Ausführungsform weist die Spindel an der ersten äußeren Umfangsseite eine Gewindenut auf. Die Gewindenut ist schraubenförmig um die Achse verlaufend ausgebildet. Die Gewindenut und die erste Spindelnut kreuzen sich in einem Winkel. Der Winkel weist vorzugsweise 65° bis 88° auf. Dadurch kann die Spindel besonders kurzgehalten werden, sodass auch insgesamt das Linearsystem eine besonders geringe Erstreckung in einer Richtung parallel zu der Achse aufweist. Von besonderem Vorteil ist, wenn die erste Spindelnut einen Spindelnutgrund und die Gewindenut einen Gewindenutgrund aufweist, wobei der Gewindenutgrund in radialer Richtung mit einem geringeren Abstand zu der Achse angeordnet ist als der Spindelnutgrund. Dadurch wird ein Verhaken der Spindelmutter beim Eingriff in die Gewindenut an der ersten Spindelnut verhindert.

In einer weiteren Ausführungsform sind das erste Leistenelement und das Führungsgehäuse einstückig und materialeinheitlich ausgebildet. Dadurch ist die Bauteilanzahl verringert. Insbesondere kann in dieser Ausführungsform auf die oben erwähnten Federelemente verzichtet werden.

Es wurde erkannt, dass ein verbessertes Verfahren zur Montage eines Linearsystems, wobei das Linearsystem wie zuvor beschrieben ausgebildet sein kann, dadurch bereitgestellt werden kann, dass ein Führungsgehäuse, wenigstens ein erstes Leistenelement, ein erstes Federelement und eine Spindel bereitgestellt werden. Dabei wird der Träger in die erste Aufnahme eingeführt, wobei die Leiste des ersten Leistenelements in die erste Spindelnut eingeführt wird und eine Position des ersten Leistenelements relativ zum Führungsgehäuse durch Erzeugen einer in axialer Richtung wirkende Spannkraft festgelegt wird.

Nachfolgend wird die Erfindung anhand von Figuren näher erläutert. Dabei zeigen:
Figur 1 einen Längsschnitt durch ein Linearsystem einer Fertigungsanlage in einer allgemeinen Ausgestaltung;
Figur 2 eine Draufsicht auf eine Linearführung eines Linearsystems gemäß einer ersten Ausführungsform;
Figur 3 eine perspektivische Darstellung eines ersten Leistenelements des in Figur 2 gezeigten Linearsystems;
Figur 4 eine perspektivische Darstellung eines ersten und eines zweiten Federelements des in den Figuren 2 und 3 gezeigten Linearsystems;
Figur 5 einen perspektivischen Längsschnitt entlang einer in Figur 2 gezeigten Achse durch das in Figur 2 gezeigte Linearsystem;
Figur 6 einen Ausschnitt einer Schnittansicht entlang einer in Figur 5 gezeigten Schnittebene A-A durch das in Figur 5 gezeigte Linearsystem;
Figur 7 eine perspektivische Darstellung einer in den Figuren 1 bis 6 gezeigten Spindel;
Figur 8 einen in Figur 7 markierten Ausschnitt X der in Figur 7 gezeigten Spindel;
Figur 9 eine perspektivische Teildarstellung eines Linearsystems gemäß einer zweiten Ausführungsform;
Figur 10 eine Schnittansicht entlang einer in Figur 9 gezeigten Schnittebene B-B durch das in Figur 9 gezeigte Linearsystem;
Figur 11 einen Längsschnitt entlang der Achse durch das in den Figuren 9 und 10 gezeigte Linearsystem;
Figur 12 einen Ausschnitt eines Längsschnitts entlang der Achse durch ein Linearsystem gemäß einer dritten Ausführungsform;
Figur 13 eine Draufsicht auf eine Linearführung eines Linearsystems gemäß einer vierten Ausführungsform;
Figur 14 eine perspektivische Schnittdarstellung durch ein Linearsystem gemäß der in Figur 13 dargestellten vierten Ausführungsform;
Figur 15 eine perspektivische Darstellung eines Linearsystems gemäß einer fünften Ausführungsform;
Figur 16 eine perspektivische Darstellung eines ersten bis dritten Gehäuseelements;
Figur 17 eine Schnittansicht entlang einer in Figur 15 gezeigten Schnittebene C-C durch das in Figur 15 gezeigte Linearsystem;
Figur 18 einen in Figur 17 markierten Ausschnitt Y der in Figur 17 gezeigten Schnittansicht entlang der in Figur 15 gezeigten Schnittebene C-C; und
Figur 19 einen Ausschnitt eines Längsschnitts durch das in den Figuren 15 bis 18 gezeigte Linearsystem.

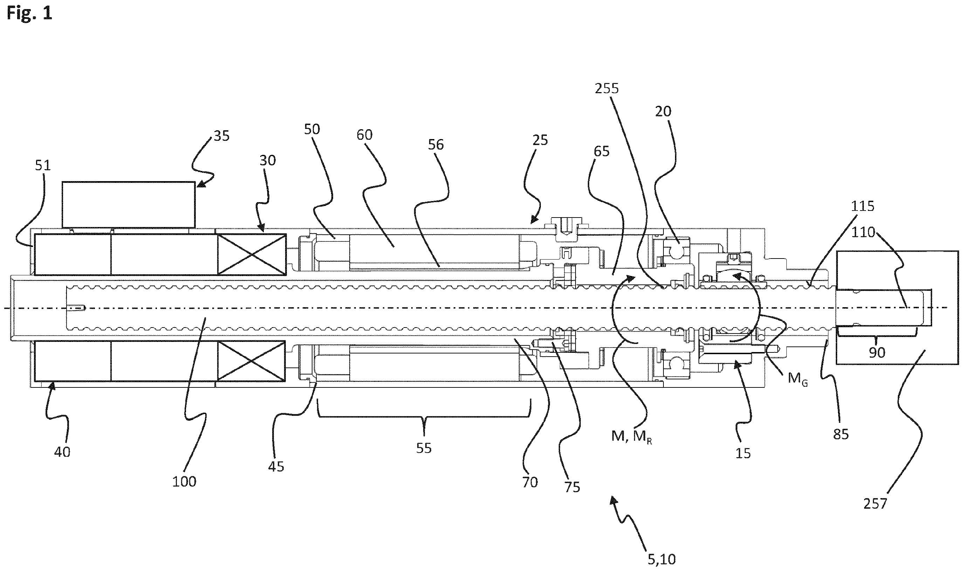

In den folgenden Figuren 1 bis 19 werden die Bezugszeichen zum erleichterten Verständnis durchweg für die gleichen Komponenten verwendet. Ferner wird in Schnittansichten aus Übersichtlichkeitsgründen auf die Darstellung von Schraffuren verzichtet.

Figur 1 zeigt einen Längsschnitt durch ein Linearsystem 10 einer Fertigungsanlage 5 in einer allgemeinen Ausgestaltung.

Das Linearsystem 10 weist eine Linearführung 15, eine erste Lageranordnung 20, eine Antriebseinrichtung 25, eine zweite Lageranordnung 30, eine Kontakteinrichtung 35, einen Drehgeber 40, ein Systemgehäuse 45, das einen Gehäuseinnenraum 50 begrenzt, und eine Spindel 100 auf.

Die Spindel 100 und das Systemgehäuse 45 erstrecken sich in ihrer Haupterstreckungsrichtung entlang einer Achse 110. Im Folgenden wird zum erleichterten Verständnis auf die Achse 110 referenziert. Dabei wird unter einer Axialrichtung bezogen auf die Achse 110 eine Richtung verstanden, die parallel zu der Achse 110 verläuft. Eine Umfangsrichtung ist eine Richtung auf einer Kreisbahn um die Achse 110 in einer Ebene senkrecht zu der Achse 110. Eine radiale Richtung verläuft in der Ebene zu der Achse 110 hin oder von der Achse 110 in der Ebene weg.

Außenseitig des Systemgehäuses 45 ist die Kontakteinrichtung 35 am Systemgehäuse 45 angeordnet. Die Kontakteinrichtung 35 stellt eine elektrische Kontaktierung des Linearsystems 10 zum Anschluss an ein Datennetzwerk (nicht in Figur 1 dargestellt) und an eine elektrische Leistungsversorgung (ebenso nicht in Figur 1 dargestellt) bereit. Die elektrische Leistungsversorgung kann beispielsweise eine elektrische Gleichstromquelle sein.

Das Datennetzwerk kann beispielsweise auf Grundlage eines standardisierten Protokolls, insbesondere eines Geberprotokolls, beispielsweise HIPERFACE der Firma SICK oder BISS-C, zur Steuerung des Linearsystems 10 betrieben werden.

Das Systemgehäuse 45 weist eine beispielhafte quaderartige Ausgestaltung auf. Das Systemgehäuse 45 erstreckt sich zwischen einem ersten axialen Ende 51 und einem axial gegenüberliegend zum ersten Ende 51 angeordneten zweiten axialen Ende 85. In dem Gehäuseinnenraum 50 ist anschließend an das erste axiale Ende 51 beispielhaft der Drehgeber 40 angeordnet. Der Drehgeber 40 ist elektrisch mittels einer in Figur 1 nicht dargestellten ersten elektrischen Verbindung mit der Kontakteinrichtung 35 elektrisch verbunden.

Die Antriebseinrichtung 25 weist beispielhaft einen Antriebsmotor 55 mit einem Rotor 56 und einem Stator 60 auf. Ferner weist die Antriebseinrichtung eine Spindelmutter 65 und eine Hohlwelle 70 auf.

Der Antriebsmotor 55 kann beispielsweise als elektrische Maschine, insbesondere als bürstenloser Gleichstrommotor, ausgebildet sein. In dieser Ausgestaltung weist der Rotor 56 beispielhaft eine Vielzahl von Permanentmagneten auf. Radial außenseitig zu dem Rotor 56 ist der Stator 60 angeordnet. Der Stator 60 ist drehfest mit dem Systemgehäuse 45 verbunden und liegt innenseitig am Systemgehäuse 45 an. Ferner ist der Stator 60, der vorzugsweise eine Mehrzahl von in Umfangsrichtung nebeneinander angeordneter Spulen aufweist, mit der Kontakteinrichtung 35, beispielsweise mittels einer in Figur 1 nicht dargestellten zweiten elektrischen Verbindung, elektrisch verbunden.

Die Spindel 100 weist eine Gewindenut 255 auf. Die Gewindenut 255 ist schraubenförmig an einer ersten äußeren Umfangsseite 115 der Spindel 100 angeordnet. Die erste äußere Umfangsseite verläuft auf einer Kreisbahn um die Achse 110. Die Gewindenut 255 erstreckt sich im Wesentlichen über einen großen Teil der ersten äußeren Umfangsseite 115 der Spindel 100. Die Spindel 100 ragt in Figur 1 beispielhaft am zweiten Ende 85 des Systemgehäuses 45 aus dem Systemgehäuse 45 mit einem Anschlussabschnitt 90 hervor. Der Anschlussabschnitt 90 schließt sich an die Gewindenut 255 in axialer Richtung an. An dem Anschlussabschnitt 90 kann beispielsweise ein Außengewinde oder eine Geradverzahnung zur Befestigung einer weiteren Komponente 257 der Fertigungsanlage 5 angeordnet sein.

Die Spindelmutter 65 greift in die Gewindenut 255 der Spindel 100 ein. Das Eingriffselement 80 kann als Innengewinde ausgebildet sein, das korrespondierend zu der Gewindenut 255 ausgebildet ist. Auch kann die Spindelmutter 65 eine oder mehrere Kugeln aufweisen, die in die Gewindenut 255 eingreifen und in der Gewindenut 255 abrollen.

Die Spindelmutter 65 wird radial außenseitig auf einer dem ersten Ende 51 abgewandten Seite durch die erste Lageranordnung 20 drehbar um die Achse 110 gelagert. Die erste Lageranordnung 20 ist ausgebildet, eine erste Radialkraft, die in radialer Richtung auf die erste Lageranordnung 20 wirkt, von der Spindelmutter 65 am Systemgehäuse 45 abzustützen.

Die Hohlwelle 70 ist drehfest auf einer dem ersten Ende 51 abgewandten Seite mit der Spindelmutter 65 verbunden.

Auf einer dem ersten Ende 51 zugewandten Seite wird die Hohlwelle 70 drehbar um die Achse 110 sowohl in radialer als auch in axialer Richtung durch die zweite Lageranordnung 30 gelagert. Gegenüber der ersten Lageranordnung 20 ist die zweite Lageranordnung 30 ausgebildet, eine in axialer Richtung wirkende Axialkraft und eine in radialer Richtung wirkende zweite Radialkraft aus der Hohlwelle 70 am Systemgehäuse 45 abzustützen.

Die Hohlwelle 70 ist an der der zweiten Seite zugewandten Seite drehfest, beispielsweise mit einer Schraubverbindung 75, mit der Spindelmutter 65 verbunden. Radial außen ist auf der Hohlwelle 70 der Rotor 56 angeordnet und drehfest mit der Hohlwelle 70 verbunden. Die Hohlwelle 70 und die Spindelmutter 65 werden durch die Spindel 100 durchgriffen. Die Hohlwelle 70 ist in Axialrichtung bezogen auf die Achse 110 deutlich länger als die Spindelmutter 65 ausgebildet. Die Hohlwelle 70 ragt beispielsweise stirnseitig am ersten Ende 51 des Systemgehäuses 45 aus dem Systemgehäuse 45 bereichsweise hervor, wobei an dem ersten Ende 51 der Gehäuseinnenraum 50 gegenüber einer Umgebung des Linearsystems 10 abgedichtet sein kann.

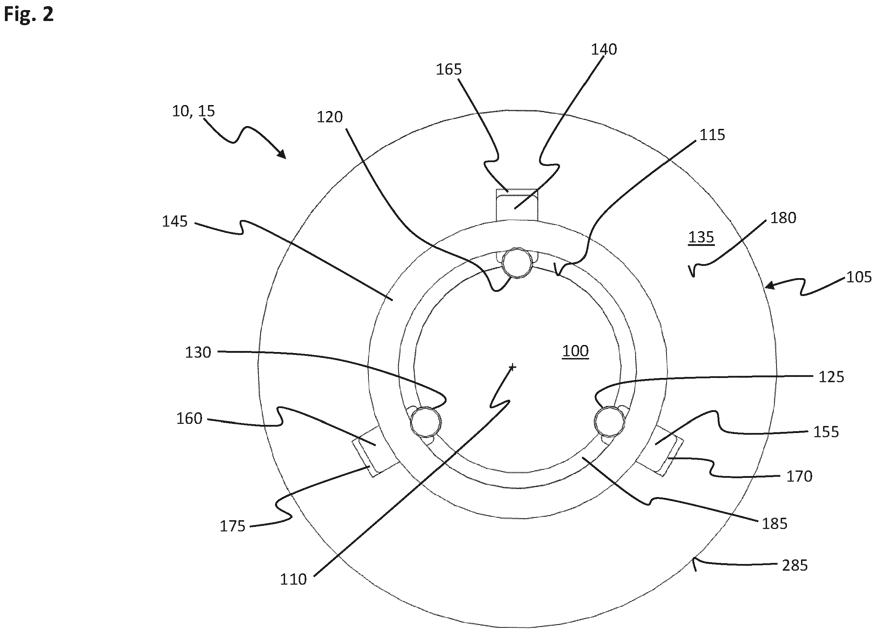

Axial angrenzend an das zweite Ende 85 des Systemgehäuses 45 ist die Linearführung 15 im Gehäuseinnenraum 50 angeordnet. Auf den konstruktiven Aufbau der Linearführung 15 wird detailliert in den Figuren 2 bis 19 eingegangen. Die Linearführung 15 ist mit dem Systemgehäuse 45 drehfest verbunden. Die Linearführung 15 stützt die Spindel 100 ab und verhindert eine Rotation der Spindel 100 um die Achse 110. Die Linearführung 15 erlaubt eine axiale Verschiebung der Spindel 100 entlang der Achse 110.

Wird der Antriebsmotor 55 mit elektrischer Energie versorgt, so stellt der Rotor 56 ein Drehmoment M, das um die Achse 110 wirkt, bereit. Der Rotor 56 leitet das Drehmoment M in die Hohlwelle 70 ein. Die Hohlwelle 70 überträgt das Drehmoment M über die Schraubverbindung 75 an die Spindelmutter 65. Mit dem Drehmoment M wird die Spindelmutter 65 um die Achse 110 rotiert und die Spindelmutter verschiebt die Spindel 100 entlang der Achse 110. Durch den Eingriff der Spindelmutter 65 in die Gewindenut 255 und die dadurch entstehende Reibung zwischen der Gewindenut 255 und Spindelmutter 65 wirkt ein Reibmoment M_{R} auf die Spindel 100. Das Reibmoment M_{R} würde, sofern keine Linearführung 15 der Spindel 100 vorgesehen wäre, die Spindel 100 in Rotation um die Achse 110 versetzen.

Die Linearführung 15 stellt ein Gegenmoment M_{G} zu dem Reibmoment M_{R} bereit. Das Gegenmoment M_{G} wirkt entgegengesetzt zu dem Reibmoment M_{R} in Umfangsrichtung. Das Gegenmoment M_{G} bewirkt, dass die Spindel 100 bei Rotation der Spindelmutter 65 um die Achse 110 in Umfangsrichtung festgehalten ist und in axialer Richtung entlang der Achse 110 aus oder in den Gehäuseinnenraum 50 geschoben wird, jedoch ohne Verdrehung der Spindel 100 um die Achse 110.

Figur 2 zeigt eine Draufsicht auf die Linearführung 15 eines Linearsystems 10 gemäß einer ersten Ausführungsform.

Die Spindel 100 ist aus Übersichtlichkeitsgründen in den Figuren 2 bis 6 nur in einer vereinfachten Darstellung dargestellt. Die Spindel 100 weist an der ersten äußeren Umfangsseite 115, die auf einer Kreisbahn um die Achse 110 verläuft, eine sich parallel zu der Achse 110 erstreckende erste Spindelnut 120 auf. Zusätzlich kann die Spindel 100 an der ersten äußeren Umfangsseite 115 auch eine zweite Spindelnut 125 aufweisen, die in Umfangsrichtung bezogen auf die Achse 110 versetzt zu der ersten Spindelnut 120 angeordnet ist. Ferner kann die Spindel 100 zusätzlich eine dritte Spindelnut 130 an der ersten äußeren Umfangsseite 115 aufweisen, die in Umfangsrichtung bezogen auf die Achse 110 versetzt zu der ersten Spindelnut 120 und der zweiten Spindelnut 125 angeordnet ist. Die zweite und dritte Spindelnut 125, 130 verlaufen analog zu der ersten Spindelnut 120 parallel zur Achse 110. Die erste bis dritte Spindelnut 120, 125, 130 sind beispielsweise in die Spindel 100 eingeschliffen.

In Figur 2 sind beispielsweise die erste Spindelnut 120, die zweite Spindelnut 125 und die dritte Spindelnut 130 in regelmäßigem Abstand, beispielsweise in einem Winkel von 120°, zueinander angeordnet.

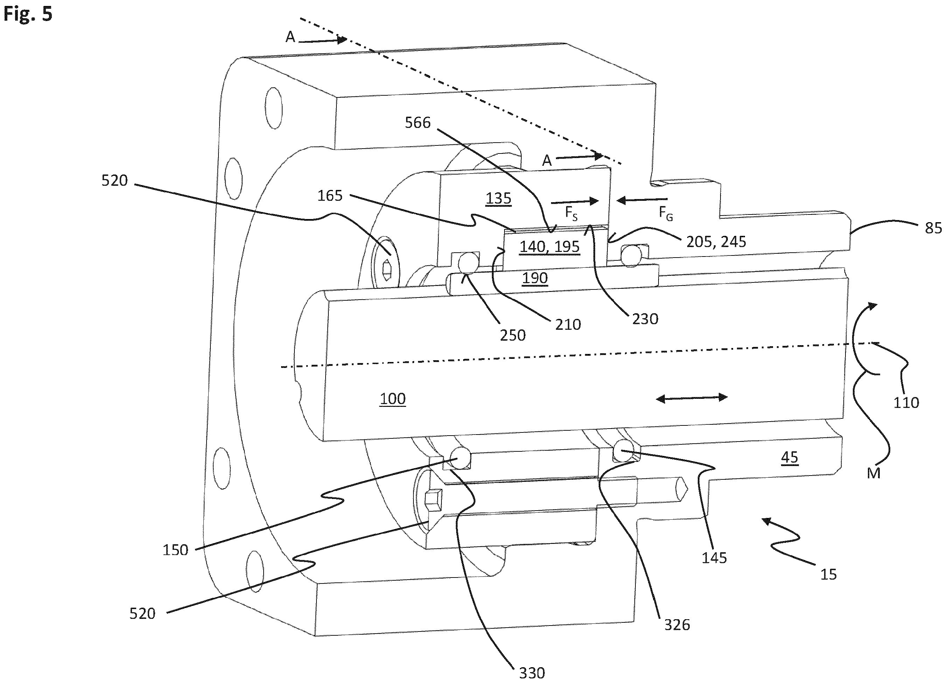

Die Linearführung 15 weist ein Führungsgehäuse 135, ein erstes Leistenelement 140, ein erstes Federelement 145 und vorzugsweise ein zweites Federelement 150 auf. Das zweite Federelement 150 ist in Figur 2 verdeckt und in Figur 5 dargestellt. Zusätzlich kann die Linearführung 15 ein zweites Leistenelement 155 und ein drittes Leistenelement 160 aufweisen.

Das Führungsgehäuse 135 ist drehfest mit dem Systemgehäuse 45 verbunden, sodass im Betrieb des Linearsystems 10 keine Rotation des Führungsgehäuses 135 um die Achse 110 erfolgt. Das Führungsgehäuse 135 weist eine ringförmige Ausgestaltung bezogen auf die Achse 110 auf. Das Führungsgehäuse 110 weist eine erste Aufnahme 165 auf. Zusätzlich weist das Führungsgehäuse 135 eine zweite Aufnahme 170 und eine dritte Aufnahme 175 auf. Die erste bis dritte Aufnahme 165, 170, 175 sind beispielhaft in regelmäßigem Abstand, beispielsweise in einem 120°-Winkel, zueinander in Umfangsrichtung um die Achse 110 versetzt angeordnet. Die erste bis dritte Aufnahme 165, 170, 175 schließen sich an eine erste Stirnseite 180 des Führungsgehäuses 135 in axialer Richtung bezogen auf die Achse 110 an. In montiertem Zustand der Linearführung 15 in dem Systemgehäuse 45 liegt die erste Stirnseite 180 an dem Systemgehäuse 45 auf einer dem zweiten Ende 85 zugewandten Seite an.

Die erste Stirnseite 180 ist senkrecht zu der Achse 110 verlaufend ausgerichtet. Die erste bis dritte Aufnahme 165, 170, 175 erstrecken sich parallel zu der Achse 110 in axialer Richtung und münden radial innenseitig an einer Spindeldurchführung 185. Die Spindeldurchführung 185 erstreckt sich durch das gesamte Führungsgehäuse 135 und weist in der Draufsicht etwa eine kreisförmige Ausgestaltung auf. Die Spindel 100 durchgreift in axialer Richtung die Spindeldurchführung 185 vollständig. Zwischen der ersten äußeren Umfangsseite 115 und dem Führungsgehäuse 135 ist ein Radialspalt ausgebildet.

Die erste bis dritte Aufnahme 165, 170, 175 erstrecken sich von der Spindeldurchführung 185 radial nach außen hin. Die erste bis dritte Aufnahme 165, 170, 175 ist in der in Figur 2 gezeigten Ausgestaltung radial außen zu einer Gehäuseaußenseite 285 geschlossen ausgebildet. Die Gehäuseaußenseite 285 liegt innenseitig an dem Systemgehäuse 45 an (vgl. Figur 1) und ist zylinderförmig ausgebildet.

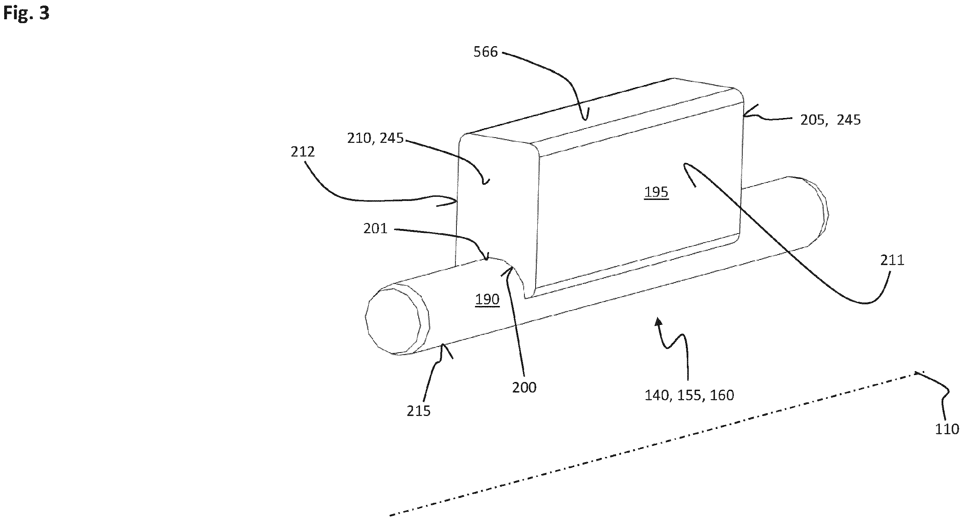

Figur 3 zeigt eine vergrößerte perspektivische Darstellung des ersten Leistenelements 140 des in Figur 2 gezeigten Linearsystems 10.

Das erste Leistenelement 140 ist identisch zu dem zweiten Leistenelement 155 und dem dritten Leistenelement 160 ausgebildet. Die folgende Erläuterung des ersten Leistenelements 140 gilt somit ebenso auch für das in Figur 2 gezeigte zweite Leistenelement 155 und dritte Leistenelement 160.

Das erste Leistenelement 140 weist eine Leiste 190 auf, wobei die Leiste 190 zylinderförmig ausgebildet ist. Die Leiste 190 erstreckt sich in montiertem Zustand der Linearführung 15 parallel zu der Achse 110.

Das erste Leistenelement 140 weist ferner einen Träger 195 auf, wobei der Träger 195 sich in montiertem Zustand parallel zu der Achse 110 in seiner Haupterstreckungsrichtung erstreckt. Der Träger 195 weist eine zweite äußere Umfangseite 245 auf. Die zweite äu-ßere Umfangsseite 245 ist im Wesentlichen zumindest in Umfangsrichtung zu der Achse 110 korrespondierend zu der Ausgestaltung der jeweiligen ersten bis dritten Aufnahme 165, 170, 175 ausgebildet. Dabei wird unter der ersten Umfangsseite 245 eine Mantelfläche des Trägers 195 verstanden. Der Träger 195 weist im Wesentlichen eine quaderartige Ausgestaltung auf. Stirnseitig weist die erste Umfangsseite 245 eine zweite Stirnseite 205 und eine dritte Stirnseite 210 auf. Die zweite Stirnseite 205 und die dritte Stirnseite 210 sind beispielhaft jeweils in einer Ebene senkrecht zu der Achse 110 angeordnet. Die zweite Stirnseite 205 ist in axialer Richtung bezogen auf die Achse 110 gegenüberliegend zu der dritten Stirnseite 210 angeordnet.

Ferner weist die zweite äußere Umfangsseite 245 des Trägers 195 eine erste Seitenfläche 211 und eine zweite Seitenfläche 212 auf. Die erste Seitenfläche 211 und die zweite Seitenfläche 212 verbinden die zweite Stirnseite 205 mit der dritten Stirnseite 210 und sind parallel zu der Achse 110 ausgerichtet. Die erste und zweite Seitenfläche 211, 212 sind parallel zueinander ausgerichtet.

Radial außen weist der Träger 195 auf eine der Leiste 190 abgewandten Seite eine Trägeraußenseite 566 auf, die parallel zu der Achse 110 ausgerichtet sein kann. Die Trägeraußenseite 566 kann beispielsweise plan ausgebildet sein. Auch eine gekrümmte Ausgestaltung ist möglich.

Radial innen weist der Träger 195 eine Befestigungsfläche 200 auf. Der Träger 195 weist in einer Draufsicht eine im Wesentlichen rechteckförmige Ausgestaltung auf, wobei radial innenseitig die Befestigungsfläche 200 angeordnet ist. Die Befestigungsfläche 200 ist korrespondierend zu einer Mantelfläche 201 der Leiste 190 ausgebildet. Die Befestigungsfläche 200 weist eine im Wesentlichen beispielhaft halbkreisförmige Ausgestaltung in der Draufsicht auf.

An der Befestigungsfläche 200 ist die Leiste 190 stoffschlüssig mit dem Träger 195 verbunden. Dabei kann an der Befestigungsfläche 200 die Mantelfläche 201 der Leiste 190 angeklebt sein. Auch kann die Leiste 190 einstückig und materialeinheitlich mit dem Träger 195 ausgebildet sein. Von besonderem Vorteil ist, wenn die Leiste 190 wenigstens einen Vergütungsstahl aufweist. Von Vorteil ist, wenn zumindest an der Mantelfläche 201 das erste Leistenelement 140 gehärtet ist. Das erste Leistenelement 140 kann auch durchgehärtet sein.

In axialer Richtung, parallel zu der Achse 110, ist in Figur 3 beispielhaft die Leiste 190 länger als der Träger 195 ausgebildet, sodass die Leiste 190 in montiertem Zustand an dem Träger 195 über die zweite Stirnseite 205 des Trägers 195 an der einen Seite und über die dritte Stirnseite 210 auf der anderen Seite in axialer Richtung hervorragt. Dabei kann die Leiste 190 mittig zu dem Träger 195 ausgerichtet sein, sodass beidseitig die Leiste 190 den Träger 195 mit gleicher Länge überragt.

Auf einer zum Träger 195 abgewandten Seite bildet die Mantelfläche 201 eine Gleitfläche 215 aus. Die Mantelfläche 201 ist geringfügig stärker gekrümmt als die Kontur der ersten Spindelnut 120 im Querschnitt. Von besonderem Vorteil ist, wenn eine Oberflächenhärte der Leiste 190 an der Gleitfläche 215 geringer ist als eine Oberflächenhärte in der ersten bis dritten Spindelnut 120, 125, 130.

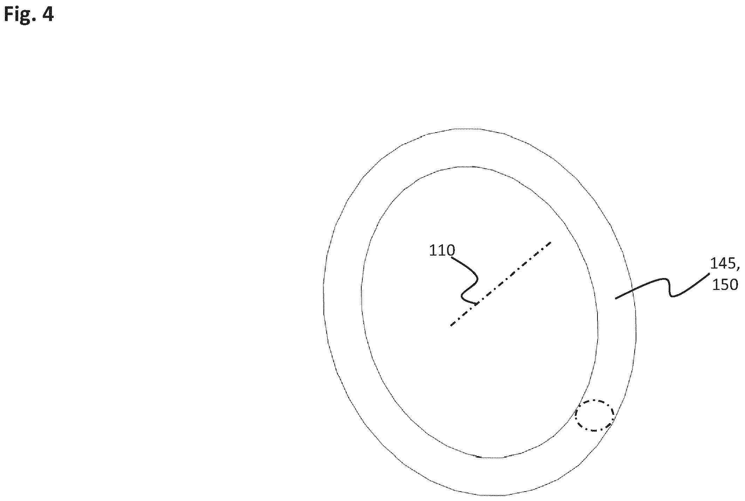

Figur 4 zeigt eine perspektivische Darstellung des ersten und zweiten Federelements 145, 150 des in den Figuren 2 und 3 gezeigten Linearsystems 10.

Das erste Federelement 145 und das zweite Federelement 150 sind beispielhaft identisch zueinander ausgebildet. In der Ausführungsform ist das erste und/oder zweite Federelement 145, 150 ringartig bezogen auf die Achse 110 ausgebildet. Das erste und/oder zweite Federelement 145, 150 kann einen kreisförmigen Querschnitt aufweisen (in Figur 4 strichliert dargestellt). Das erste und/oder zweite Federelement 145, 150 kann im Allgemeinen auch als O-Ring bezeichnet werden. Vorzugsweise weist das erste Federelement 145 und/oder das zweite Federelement 150 einen elastischen, reversibel verformbaren Werkstoff auf. Der Werkstoff kann beispielsweise Silikon, Gummi, Elastomer, aufweisen.

Figur 5 zeigt einen perspektivischen Längsschnitt entlang der in Figur 2 gezeigten Achse 110 durch das in Figur 2 gezeigte Linearsystem 10.

Die erste Aufnahme 165 ist axial auf einer Seite des Führungsgehäuses 135 durch das Führungsgehäuse 135 verschlossen, die einer vierten Stirnseite 335 des Führungsgehäuses 135 zugewandt ist. In axialer Richtung kann die erste Aufnahme 165 geringfügig kürzer ausgebildet sein als der Träger 195. Die erste Aufnahme 165 mündet in der ersten Stirnseite 180. Die erste Stirnseite 180 und die vierte Stirnseite 335 verlaufen parallel zueinander und sind senkrecht zur Achse 110 ausgerichtet. In montiertem Zustand der Linearführung 15 in dem Systemgehäuse 45 ist die vierte Stirnseite 335 auf einer dem ersten Ende 51 und der Spindelmutter 65 zugewandten Seite angeordnet (vgl. Figur 1).

Das Systemgehäuse 45 weist eine erste umlaufende Nut 326 auf. Die erste Nut 326 ist in Axialrichtung zwischen dem Führungsgehäuse 135 und dem zweiten Ende 85 des Systemgehäuses 45 (vgl. Figur 1) angeordnet. Die erste Nut 326 mündet radial innenseitig an der Spindeldurchführung 185. Die erste Nut 326 ist in Längsrichtung breiter als das erste Federelement 145 ausgebildet. In der ersten Nut 326 ist das erste Federelement 145 angeordnet. Die erste Nut 326 kann beispielhaft rechteckeckförmig ausgebildet sein.

Zwischen der vierten Stirnseite 335 und der ersten Aufnahme 165 ist eine zweite umlaufende Nut 330 in dem Führungsgehäuse 135 ausgebildet, die radial innenseitig in der Spindeldurchführung 185 mündet. In der zweiten Nut 330 ist das zweite Federelement 150 angeordnet. Die zweite Nut 330 ist in Längsrichtung breiter als das zweite Federelement 150 ausgebildet. Die zweite Nut 330 kann beispielhaft rechteckeckförmig ausgebildet sein.

Durch die Anordnung des ersten und zweiten Federelements 145, 150 in der ersten bzw. zweiten Nut 326, 330 ist die Linearführung 15 in Axialrichtung bezogen auf die Achse 110 besonders kompakt ausgebildet.

Das Führungsgehäuse 135 ist mittels eines Befestigungsmittels 520 (schematisch in Figur 5 gezeichnet) mit dem Systemgehäuse 45 verbunden. Das Befestigungsmittel 520 stellt eine in axialer Richtung parallel zur Achse 110 wirkende Spannkraft Fs bereit. Das Befestigungsmittel 520 kann eine oder mehrere Schrauben aufweisen, die in axialer Richtung das Führungsgehäuse 135 durchgreifen und in das Systemgehäuse 45 eingeschraubt sind.

Das Systemgehäuse 45 stellt eine korrespondierend zur Spannkraft Fs wirkende Gegenkraft F_{G} bereit. Die Gegenkraft F_{G} wirkt in axialer Richtung gegen die Spannkraft Fs. Das Führungsgehäuse 135 drückt mit der Spannkraft Fs gegen die dritte Stirnseite 210. Der Träger 190 wird durch die Spannkraft F_{S} an der zweiten Stirnseite 205 gegen das Systemgehäuse 45 stirnseitig gepresst. Dadurch wird eine kraftschlüssige Verbindung zwischen Träger 190, Führungsgehäuse 135 und Systemgehäuse 45 bereitgestellt.

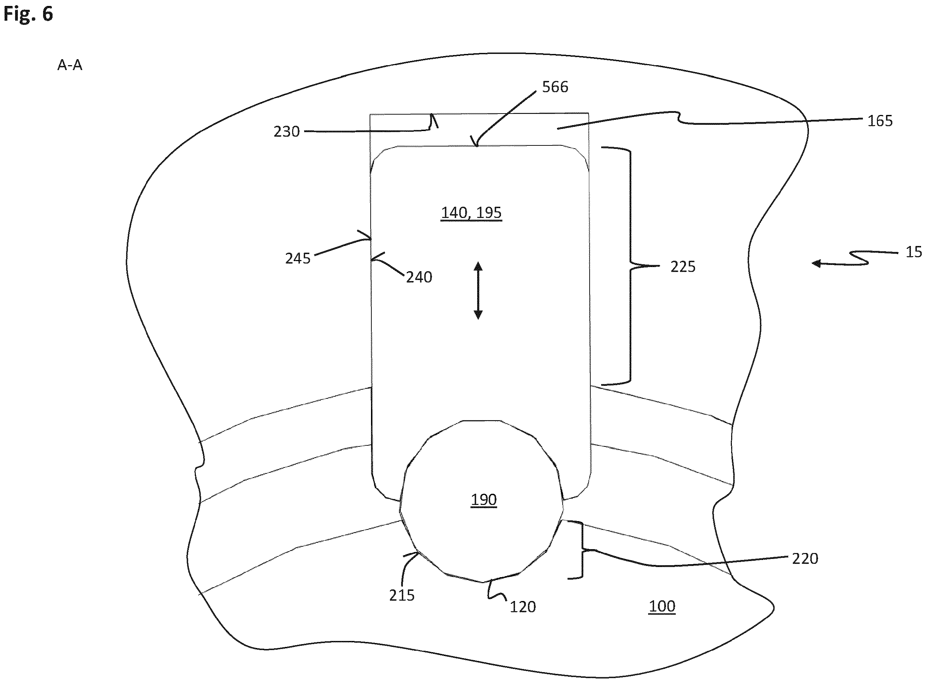

Figur 6 zeigt einen Ausschnitt einer Schnittansicht entlang einer in Figur 5 gezeigten Schnittebene A-A durch das in Figur 5 gezeigte Linearsystem 10.

Eine zweite äußere Umfangsseite 245 des Trägers 195 ist zumindest abschnittsweise korrespondierend zu einer ersten inneren Umfangsseite 240 der ersten Aufnahme 165 ausgebildet. Das erste Leistenelement 140 greift mit einem ersten Teilabschnitt 220 in die erste Spindelnut 120 ein. Dabei liegt die Gleitfläche 215 an der ersten Spindelnut 120 an.

Mit einem zweiten Teilabschnitt 225 des Trägers 195 greift der Träger 195 in die erste Aufnahme 165 ein. Die erste Aufnahme 165 ist in radialer Richtung derart ausgebildet, dass eine radial außen am Träger 195 des ersten Leistenelements 140 angeordnete Trägeraußenseite 566, die vorzugsweise parallel zu der Achse 110 verläuft, in Radialrichtung beabstandet zu einem Aufnahmegrund 230 der ersten Aufnahme 165 angeordnet ist. Durch die beabstandete Anordnung wird eine Überbestimmung der Linearführung 15 vermieden. Ferner wird dadurch ein Toleranzausgleich in radialer Richtung für die Spindel 100 bereitgestellt.

Die erste innere Umfangsseite 240 der ersten Aufnahme 165 kann zu der zweiten äußeren Umfangsseite 245 des Trägers 195 beispielsweise als Spielpassungssystem ausgebildet, um eine zuverlässige Bewegung des ersten Leistenelements 140 in radialer Richtung bezogen auf die Achse 110 in der Montage der Linearführung 15 sicherzustellen (mittels Pfeilen in Figur 6 symbolisch dargestellt). Ferner wird ein zuverlässiges Gleiten der zweiten äußeren Umfangsseite 245 an der ersten inneren Umfangsseite 240 der ersten Aufnahme 165 in der Montage sichergestellt. Das Spielpassungssystem ist so gewählt, dass es nur in der Montage vorliegt und in montiertem Zustand das Spielpassungssystem aufgehoben ist und der Träger 195 kraftschlüssig mittels der Spannkraft Fs und der Gegenkraft F_{G} an dem Systemgehäuse 45 und dem Führungsgehäuse 135 befestigt ist.

Im Folgenden werden die Figuren 5 und 6 gemeinsam erläutert.

Das zweite Federelement 150 ist identisch zu dem ersten Federelement 145 beispielhaft ausgebildet. In montiertem Zustand der Linearführung 15 liegen radial außen das erste Federelement 145 und das zweite Federelement jeweils mit einer zweiten inneren Umfangsseite 250 an der Mantelfläche 201 der Leiste 190 des ersten Leistenelements 140 an.

Durch die ringförmige Ausgestaltung des ersten Federelements 145 und des zweiten Federelements 150 umgreifen das erste Federelement 145 und das zweite Federelement 150 nicht nur die Leiste 190 des ersten Leistenelements 140, sondern auch die Leiste 190 des zweiten Leistenelements 155 (vgl. Figur 2) sowie die Leiste 190 des dritten Leistenelements 160 radial außenseitig. Dadurch ist eine Bauteilanzahl der Linearführung 15 zum Halten der Leiste 190 in der jeweiligen ersten bis dritten Spindelnut 120, 125, 130 reduziert.

Ferner wird durch das erste Federelement 145 und das zweite Federelement 150 die Spindel 100 umgriffen. Die zweite innere Umfangsseite 250 des ersten und zweiten Federelements 145, 150 ist vorzugsweise beabstandet zu der ersten äußeren Umfangsseite 115 der Spindel 100 angeordnet. Dadurch wird ein Verklemmen und/oder ein Hängenbleiben des ersten und/oder zweiten Federelements 145, 150 an der Gewindenut 255 vermieden.

In montiertem Zustand sind das erste Federelement 145 und das zweite Federelement 150 derart auf die Leiste 190 des ersten bis dritten Leistenelements 140, 155, 160 aufgebracht, dass die ringförmige Ausgestaltung des ersten Federelements 145 und des zweiten Federelements 150 im Wesentlichen aufrechterhalten bleibt.

In Axialrichtung ist das zweite Federelement 150 versetzt zu dem ersten Federelement 145 angeordnet.

Das zweite Federelement 150 und das erste Federelement 145 stellen sicher, dass die Gleitfläche 215 der jeweiligen Leiste 190 in die jeweils zugeordnete erste bis dritte Spindelnut 120, 125, 130 eingreift. An dem Kontakt zwischen erster bis dritter Spindelnut 120, 125, 130 und der jeweils anliegenden Leiste 190 wirken das Reibmoment M_{R} und das Gegenmoment M_{G} gegeneinander. Dadurch wird die Rotation der Spindel 100 um die Achse 110 durch die Linearführung 15 verhindert.

Durch den Kontakt, der durch die Hertzsche Pressung flächig ist, wird ein Verklemmen der Leiste 190 in der jeweils zugeordneten ersten bis dritten Spindelnut 120, 125, 130 vermieden. Ferner wird durch die Leiste 190 bei einer Bewegung der Spindel 100 entlang der Achse 110 eine gute Führung sichergestellt.

Durch die einstückige und materialeinheitliche Ausgestaltung des ersten bis dritten Leistenelements 140, 155, 160 oder der stoffschlüssigen Verbindung der entsprechenden Leiste 190 mit dem Träger 195 des ersten bis dritten Leistenelements 140, 155, 160 wird das Gegenmoment M_{G} über das erste bis dritte Leistenelement 140, 155, 160 radial nach außen abgestützt. Das Gegenmoment M_{G} wird an dem Führungsgehäuse 135 durch den Eingriff des zweiten Teilabschnitts 225 durch die jeweils korrespondierende erste bis dritte Aufnahme 165, 170, 175 an dem drehfest angeordneten Führungsgehäuse 135 abgestützt.

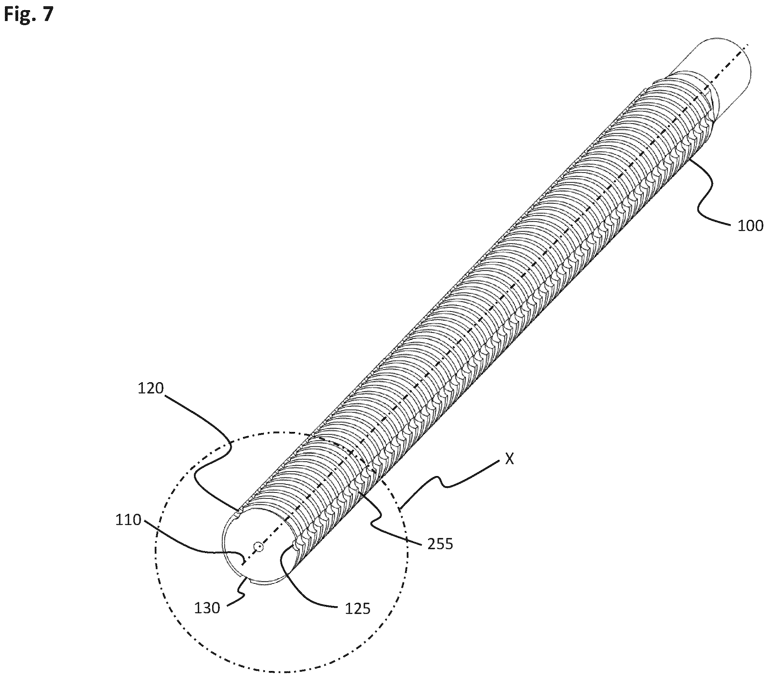

Figur 7 zeigt eine perspektivische Darstellung der in den Figuren 1 bis 6 gezeigten Spindel 100.

Die Spindel 100 weist neben der ersten bis dritten Spindelnut 120, 125, 130 an der ersten äußeren Umfangsseite 115 zusätzlich die Gewindenut 255 auf, wobei die Gewindenut 255 schraubenförmig um die Achse 110 verlaufend ausgebildet ist. Die Gewindenut 255 und die erste bis dritte Spindelnut 120, 125, 130 kreuzen sich in einem Winkel. Vorzugsweise beträgt der Winkel 65° bis 88°.

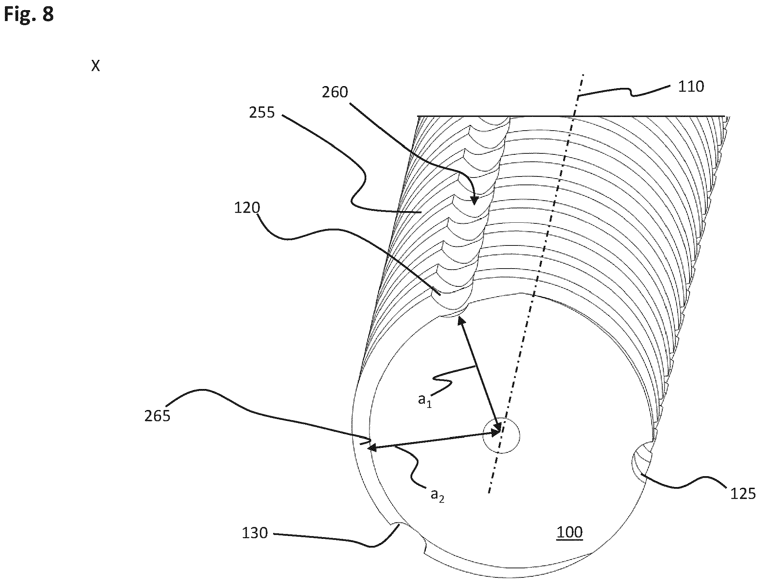

Figur 8 zeigt einen in Figur 7 markierten Ausschnitt X der in Figur 7 gezeigten Spindel 100.

Die erste bis dritte Spindelnut 120, 125, 130 weisen jeweils einen Spindelnutgrund 260 auf. Am Spindelnutgrund 260 weist die jeweilige erste bis dritte Spindelnut 120, 125, 130 einen minimalen ersten Abstand a₁ zu der Achse 110 auf. Die Gewindenut 255 weist einen Gewindenutgrund 265 auf, wobei der Gewindenutgrund 265 einen zweiten minimalen Abstand a₂ zu der Achse 110 aufweist. Der Gewindenutgrund 265 ist in einem geringeren zweiten Abstand a₂ zu der Achse 110 angeordnet als der Spindelnutgrund 260 mit dem ersten Abstand a₁. Diese Ausgestaltung hat den Vorteil, dass beim Eingriff der Spindelmutter 65 in die Gewindenut 255 ein Verkanten der Spindelmutter 65 an der ersten und/oder zweiten und/oder dritten Spindelnut 120, 125, 130 vermieden wird, sodass eine zuverlässige Rotation der Spindelmutter 65 um die Achse 110 sichergestellt ist. Alternativ können der erste Abstand a₁ und der zweite Abstand a₂ identisch sein.

Zur Montage des Linearsystems 10 werden in einem ersten Montageschritt das Führungsgehäuse 135 und das erste bis dritte Leistenelement 140, 155, 160 sowie das erste und zweite Federelement 145, 150 sowie das Systemgehäuse 45 bereitgestellt.

In einem zweiten Montageschritt, werden das erste und zweite Federelement 145, 150 in der jeweils zugeordneten ersten und zweiten Nut 326, 330 im Führungsgehäuse 135 positioniert.

In einem auf den zweiten Montageschritt folgenden dritten Montageschritt werden jeweils die Träger 190 des ersten bis dritten Leistenelements 140, 155, 160 in axialer Richtung in die zugeordnete erste bis dritte Aufnahme 165, 170, 175 vorzugsweise von radial innen nach radial außen eingesteckt.

Ein Innendurchmesser des ersten und zweiten Federelements 145, 150 ist so gewählt, dass in ungespanntem Zustand des ersten und zweiten Federelements 145, 150 das erste und zweite Federelement 145, 150 außenseitig auf den Leisten 190 aufliegt, aber das erste bis dritte Leistenelement 140, 155, 160 nur soweit radial nach innen zieht, dass die jeweiligen Träger 195 des ersten bis dritten Leistenelements 140, 155, 160 in der jeweils zugeordneten ersten bis dritten Aufnahme 165, 170, 175 verbleiben.

In einem auf den dritten Montageschritt folgenden vierten Montageschritt wird die Spindel 100 durch die Spindeldurchführung 185 gesteckt und die Leisten 190 in die jeweils zugeordnete erste bis dritte Spindelnut 120, 125, 130 eingefädelt. Dabei kann die Spindel 100 relativ zu dem Führungsgehäuse 135 in einem kleinen Winkel (kleiner 5°) in Umfangsrichtung um die Achse 110 hin- und herrotiert werden. Dabei kann, je nach Ausgestaltung des ersten und zweiten Federelements 145, 150, das erste und zweite Federelement 145, 150 gespannt werden, sodass die Gleitfläche 215 der Leiste 190 an der jeweils zugeordneten ersten bis dritten Spindelnut 120, 125, 130 anliegt bzw. durch das erste und zweite Federelement 145, 150 angedrückt wird.

In einem auf den vierten Verfahrensschritt folgenden fünften Montageschritt wird die Linearführung 15 im Linearsystem 10 montiert und das Führungsgehäuse 135 an dem Systemgehäuse 45 mittels des Befestigungsmittels 520 befestigt. Das Befestigungsmittel 520 wird derart montiert, dass die Spannkraft F_{S} auf das Führungsgehäuse 135 wirkt. Danach werden die weiteren Komponenten des Linearsystems 10 montiert.

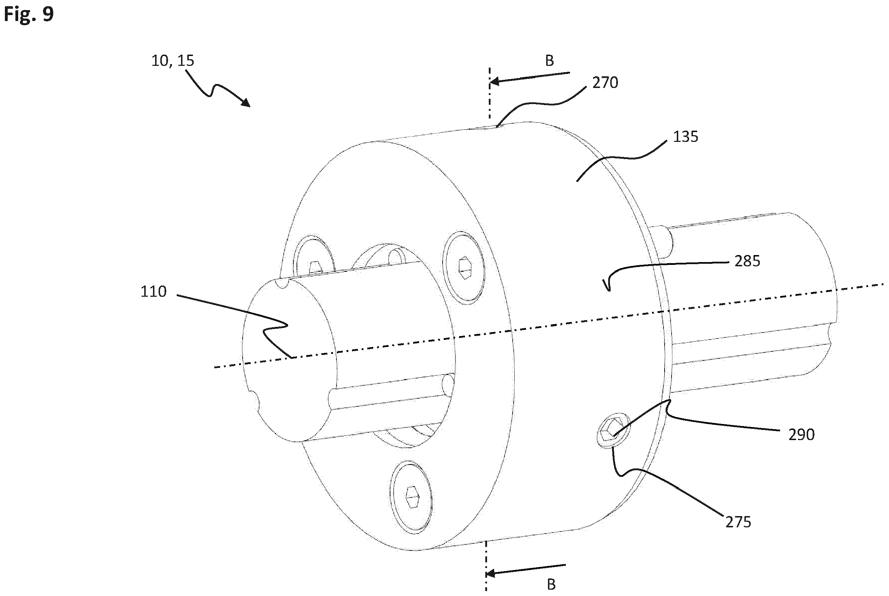

Figur 9 zeigt eine perspektivische Teildarstellung eines Linearsystems 10 gemäß einer zweiten Ausführungsform.

In Figur 9 wird aus Übersichtlichkeitsgründen auf die Darstellung zahlreicher Komponenten des Linearsystems 10, insbesondere auf die Darstellung des Systemgehäuses 45, verzichtet.

Die Linearführung 15 ist im Wesentlichen identisch zu der in den Figuren 1 bis 8 gezeigten Linearführung 15 ausgebildet. Im Folgenden wird ausschließlich auf die Unterschiede der in Figur 9 gezeigten Linearführung 15 gegenüber der in den Figuren 1 bis 8 gezeigten Linearführung 15 eingegangen.

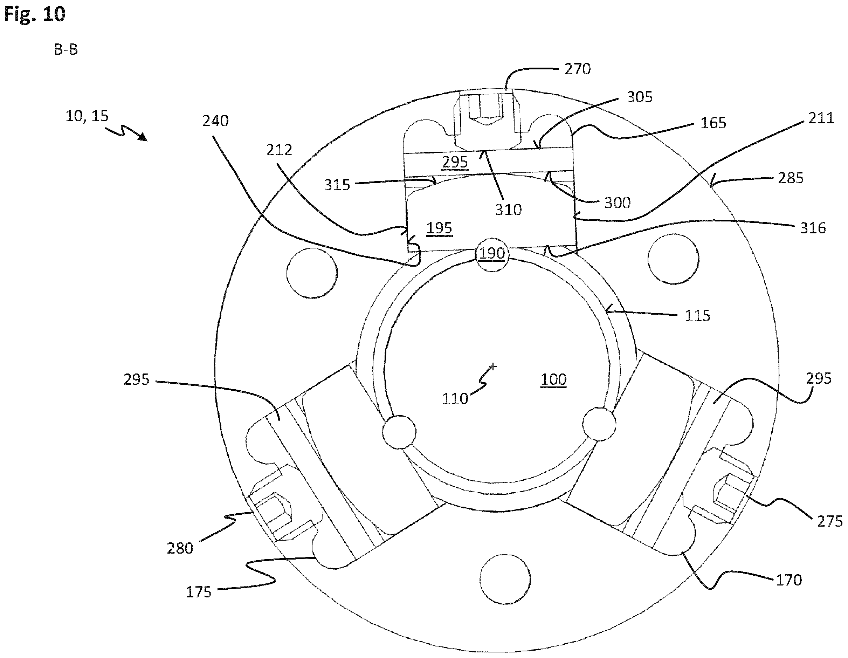

Das Führungsgehäuse 135 weist wenigstens eine erste Durchgangsöffnung 270 auf. Zusätzlich kann das Führungsgehäuse 135 eine zweite Durchgangsöffnung 275 und eine in Figur 9 verdeckt angeordnete dritte Durchgangsöffnung 280 (dargestellt in Figur 10) aufweisen. Die erste bis dritte Durchgangsöffnung 270, 275, 280 münden an der Gehäuseaußenseite 285 des Führungsgehäuses 135. In jeder der ersten bis dritten Durchgangsöffnungen 270, 275, 280 ist jeweils ein Fixierelement 290 angeordnet. Das Fixierelement 290 kann beispielsweise als Schraube, insbesondere als Madenschraube, ausgebildet sein. Auch eine andere Ausgestaltung des Fixierelements 290, beispielsweise als Klemmkörper, der in die jeweils zugeordnete erste bis dritte Durchgangsöffnung 270, 275, 280 eingreift, wäre denkbar. Das Fixierelement 290 ist in Figur 9 beispielhaft von radial außen nach radial innen hin in Richtung der Achse 110 in die jeweils zugeordnete erste bis dritte Durchgangsöffnung 270, 275, 280 eingeführt, vorzugsweise eingeschraubt.

Figur 10 zeigt eine Schnittansicht entlang einer in Figur 9 gezeigten Schnittebene B-B durch das in Figur 9 gezeigte Linearsystem 10.

Die erste Durchgangsöffnung 270 erstreckt sich von der Gehäuseaußenseite 285 radial nach innen hin in Richtung der Achse 110. Radial innen mündet die erste Durchgangsöffnung 270 in der ersten Aufnahme 165. Dabei ist beispielhaft die erste Durchgangsöffnung 270 in radialer Richtung kürzer ausgebildet als die erste Aufnahme 165.

Die zweite Durchgangsöffnung 275 und die zweite Aufnahme 170 sowie die dritte Durchgangsöffnung 280 und die dritte Aufnahme 175 sind identisch zu der Ausgestaltung der ersten Durchgangsöffnung 270 und der ersten Aufnahme 165 angeordnet und ausgebildet, sodass auf die erste Durchgangsöffnung 270 bzw. die erste Aufnahme 165 dahingehend verwiesen wird.

Die Linearführung 15 weist zusätzlich eine Druckplatte 295 auf. Die Druckplatte 295 weist radial innen auf einer der Achse 110 zugewandten Seite eine erste Anlagefläche 300 auf.

Die erste Anlagefläche 300 ist gekrümmt, vorzugsweise konvex ausgebildet. Der Träger 195 weist auf einer der Achse 110 abgewandten Seite eine zweite Anlagefläche 315 auf. Die zweite Anlagefläche 315 ist gekrümmt, vorzugsweise konkav ausgebildet. Vorzugsweise weist die Krümmung einen Krümmungsmittelpunkt auf, der auf der Achse 110 angeordnet ist. Von besonderem Vorteil ist hierbei, wenn die zweite Anlagefläche 315 teilkugelförmig oder (teil-)sphärisch ausgebildet ist.

Die Druckplatte 295 weist auf einer der Achse 110 abgewandten und radial außen angeordneten Seite eine dritte Anlagefläche 305 auf. Die dritte Anlagefläche 305 erstreckt sich im Wesentlichen in einer Ebene und ist plan ausgebildet. Die dritte Anlagefläche 305 ist tangential zu einer Kreisbahn um die Achse 110 ausgerichtet. Das Fixierelement 290 liegt in montiertem Zustand der Linearführung 15 an der dritten Anlagefläche 305 mit einer radial innenseitig angeordneten Kontaktfläche 310 vorzugsweise flächig oder linienförmig oder punktförmig an. Durch das flächige oder linienförmige Anliegen der Kontaktfläche 310 an der dritten Anlagefläche 305 wird ein Verkippen der Druckplatte 295 beim Einschrauben des Fixierelements 290 in die erste Durchgangsöffnung 270 vermieden.

Der Träger 195 ist in der Ausführungsform in Umfangsrichtung deutlich breiter als die Leiste 190 ausgebildet. Somit ragt in Umfangsrichtung der Träger 195 über die Leiste 190. Von besonderem Vorteil ist hierbei, wenn eine Breite des Trägers 195 in Umfangsrichtung so breit gewählt ist, dass der Träger 195 vollständig in der ersten Aufnahme 165 angeordnet ist und radial innenseitig nicht über die erste Aufnahme 165 herausragt. Eine Innenseite 316 des Trägers 195 ist dabei tangential zu einer Kreisbahn, die um die Achse 110 verläuft, ausgerichtet. Diese Ausgestaltung hat den Vorteil, dass ein Berührkontakt der Innenseite 316 mit der ersten äußeren Umfangsseite 115 der Spindel 100 vermieden wird.

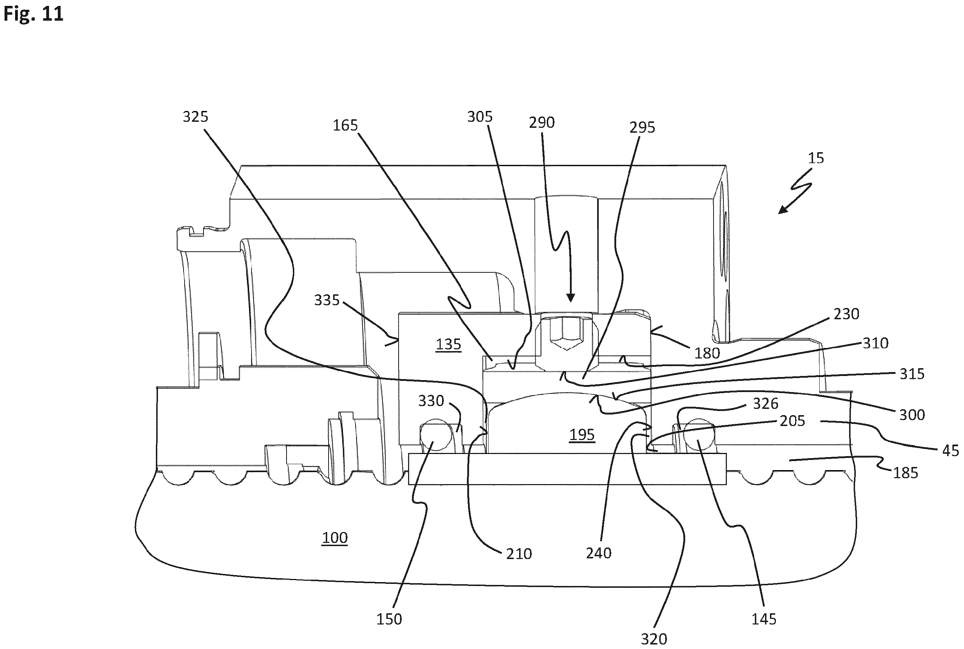

Figur 11 zeigt einen Längsschnitt entlang der Achse 110 durch das in den Figuren 9 und 10 gezeigte Linearsystems 10.

An der ersten Stirnseite 180 des Führungsgehäuses 135 liegt das Systemgehäuse 45 an der Linearführung 15 an.

Die zweite Anlagefläche 315 weist an der ersten Anlagefläche 300 im Wesentlichen einen Linienkontakt oder einen Flächenkontakt auf, wobei der Linienkontakt beispielhaft parallel zu der Achse 110 verläuft.

Umfangsseitig liegt die Druckplatte 295 an der ersten inneren Umfangsseite 240 der ersten Aufnahme 165 an, sodass in radialer Richtung verkippungsfrei die Druckplatte 295 in der ersten Aufnahme 165 durch das Fixierelement 290 oder den Träger 195 verschoben werden kann.

Gegenüber der in den Figuren 1 bis 8 gezeigten Ausgestaltung ist zwischen der zweiten Stirnseite 205 und der ersten inneren Umfangsseite 240 ein erster Axialspalt 320 und zwischen der dritten Stirnseite 210 und der ersten inneren Umfangsseite 240 ein zweiter Axialspalt 325 ausgebildet.

In Umfangsrichtung liegt (wie in Figur 10 gezeigt) der Träger 195 an der ersten inneren Umfangsseite 240 mit der ersten Seitenfläche 211 und/oder der zweiten Seitenfläche 212 an, sodass zuverlässig an der ersten inneren Umfangsseite 240 das Gegenmoment M_{G} abgestützt ist. Durch den ersten und zweiten Axialspalt 320, 325 wird ein Verklemmen des ersten Leistenelements 140 in der Montage der Linearführung 15 vermieden. Ferner wird eine Überbestimmung der Linearführung 15 vermieden. Die axiale Positionierung des ersten Leistenelements 140 in der ersten Aufnahme 165 erfolgt somit ausschließlich über den Linienkontakt zwischen der zweiten Anlagefläche 315 und der ersten Anlagefläche 300. Diese Ausgestaltung hat den Vorteil, dass das erste Leistenelement 140 das Gegenmoment M_{G} und Radialkräfte abstützen kann, die in radialer Richtung nach außen hin wirken. Die Linearführung 15 fungiert vorzugsweise mechanisch als reines Drehgelenk. Damit ist es unempfindlich gegenüber Verkippungen rechtwinklig zur Achse 110.

Um die in den Figuren 9 bis 11 gezeigte Linearführung 15 zu montieren, werden im Folgenden die Figuren 9 bis 11 gemeinsam erläutert.

Das Verfahren zur Montage ist im Wesentlichen identisch zu dem zur Montage des in den Figuren 1 bis 8 gezeigten Linearsystems 10. Im Folgenden wird ausschließlich auf die Unterschiede gegenüber dem in den Figuren 1 bis 8 gezeigten Verfahren eingegangen.

Im ersten Montageschritt kann die erste bis dritte Durchgangsöffnung 270, 275, 280 offen sein. Zusätzlich werden die gleiche Anzahl von Fixierelementen 290 sowie erste bis dritte Durchgangsöffnungen 270, 275, 280 bereitgestellt.

In dem zweiten Montageschritt, der auf den ersten Verfahrensschritt folgt, werden das erste Federelement 145 in der ersten Nut 326 und das zweite Federelement 150 in der zweiten Nut 330 eingelegt.

Zusätzlich wird im dritten Montageschritt vor Einfügen des Trägers 195 in die jeweils zugeordnete erste bis dritte Aufnahme 165, 170, 175 jeweils eine Druckplatte 295 in die erste bis dritte Aufnahme 165, 170, 175 derart eingelegt, dass die gekrümmt ausgebildete erste Anlagefläche 300 auf der zur Achse 110 zugewandten Seite angeordnet ist. Danach werden die Träger 195 des ersten bis dritten Leistenelements 140, 155, 160 in die jeweils zugeordnete erste bis dritte Aufnahme 165, 170, 175 eingesteckt.

Die Druckplatte 295 wird beispielsweise radial nach außen hin so weit geschoben, bis die Druckplatte 295 am Aufnahmegrund 230 der ersten Aufnahme 165 anschlägt. In die zweite Aufnahme 170 sowie in die dritte Aufnahme 175 wird jeweils auch eine Druckplatte 295 in identischer Art und Weise wie eben beschrieben eingelegt.

In der Ausführungsform sind der vierte und fünfte Montageschritt vertauscht, sodass zuerst das Führungsgehäuse 135 mit dem ersten bis dritten Leistenelementen 140, 155, 160 in das Systemgehäuse 45 eingeführt und mit dem Systemgehäuse 45 verbunden, beispielsweise verschraubt wird. Danach wird die Spindel 100 durch die Linearführung wie oben im vierten Montageschritt beschrieben in das Linearsystem 10 eingeführt.

In einem auf den fünften Montageschritt folgenden zusätzlichen, sechsten Montageschritt wird in jeder der ersten bis dritten Durchgangsöffnungen 270, 275, 280 jeweils ein Fixierelement 290 eingepasst, beispielsweise eingeschraubt. Auf die Bereitstellung der Spannkraft Fs und der Gegenkraft F_{G} wird verzichtet, wodurch die Position des ersten Leistenelements 140 relativ zum Führungsgehäuse 135 über die Druckplatte und das Fixierelement 290 definiert festgelegt wird.

Dabei wird das Fixierelement 290 in jeder der ersten bis dritten Durchgangsöffnungen 270, 275, 280 so weit radial nach innen hineinbewegt, beispielsweise eingeschraubt, bis die Kontaktfläche 310 an der dritten Anlagefläche 305 spielfrei, aber unverspannt anliegt. Gleichzeitig liegt in diesem Zustand die erste Anlagefläche 300 spielfrei und kraftfrei im Wesentlichen an der zweiten Anlagefläche 315 an. Ebenso liegt die Gleitfläche 215 in der jeweils zugeordneten ersten bis dritten Spindelnut 120, 125, 130 spielfrei an.

Das Fixierelement 290 kann gegen ein unbeabsichtigtes Lösen, beispielsweise mittels eines Schraubensicherungsmittels, gesichert sein. Auch kann in die erste bis dritte Durchgangsöffnung 270, 275, 280 von radial außen zur Sicherung des als Madenschraube ausgebildeten Fixierelements 290 eine Konterschraube eingeschraubt sein.

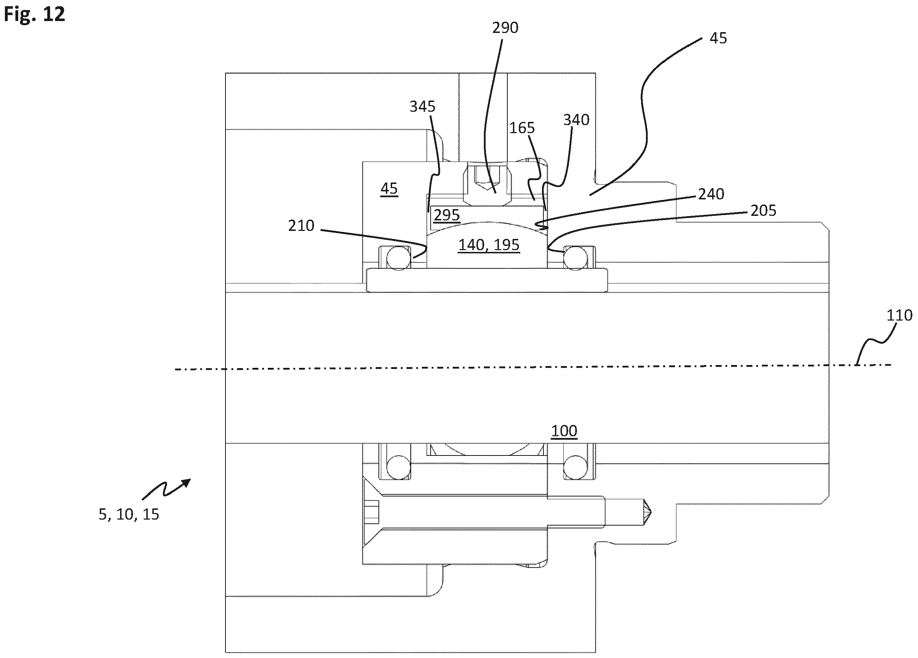

Figur 12 zeigt einen Ausschnitt eines Längsschnitts durch ein Linearsystem 10 gemäß einer dritten Ausführungsform.

Das Linearsystem 10 ist im Wesentlichen identisch zu dem in den Figuren 9 bis 11 gezeigten Linearsystem 10 ausgebildet. Im Folgenden wird ausschließlich auf die Unterschiede der in Figur 12 gezeigten dritten Ausführungsform des Linearsystems 10 gegenüber der in den Figuren 9 bis 11 gezeigten zweiten Ausführungsform der Linearsystems 10 eingegangen.

In Figur 12 ist die Druckplatte 295 in Axialrichtung bezogen auf die Achse 110 kürzer als in den Figuren 9 bis 12 gezeigt ausgebildet, sodass in Axialrichtung zwischen der ersten inneren Umfangsseite 240 und der Druckplatte 295 ein dritter Axialspalt 340 angeordnet ist. Ferner ist zwischen dem Systemgehäuse 45 und der Druckplatte 295 stirnseitig ein vierter Axialspalt 345 angeordnet. Durch den dritten und vierten Axialspalt 340, 345 wird eine Überbestimmung der Linearführung 15 vermieden.

Ferner liegt der Träger 195 umfangsseitig an der ersten inneren Umfangsseite 240, insbesondere, abweichend gegenüber Figuren 9 bis 12, auch an der dritten Stirnseite 210 an der ersten inneren Umfangsseite 240 an. Die zweite Stirnseite 205 liegt am Systemgehäuse 45 an, das die erste Aufnahme 165 stirnseitig verschließt. Dadurch wird ein Verkippen des Trägers 195 und somit des ersten Leistenelements 140 in der ersten Aufnahme 165 verhindert. Der Träger 195 ist vorzugsweise in der ersten Aufnahme 165 nur axialer Richtung und in Umfangsrichtung geführt, jedoch nicht durch das Befestigungsmittel 520 in der ersten Aufnahme 165 verspannt. Der Träger 165 des ersten Leistenelements 140 kann somit in radialer Richtung von radial innen nach außen und zurück in der ersten Aufnahme 165 bewegt werden, wenn das Fixierelement 290 gelockert oder demontiert ist. Diese Ausgestaltung eignet sich insbesondere dafür, wenn mit der Linearführung 15 kein oder nur ein geringes Biegemoment aus der Spindel 100 abzustützen ist. Durch diese Ausgestaltung wird eine Überbestimmung vermieden, sodass eine vereinfachte Montage bzw. Justage möglich ist.

Das Fixierelement 290 sichert in montiertem Zustand in radialer Richtung über die Druckplatte 295 die radiale Position des ersten Leistenelements 140 in der ersten Aufnahme 165. Insbesondere kann durch das Fixierelement 290 das Anliegen der Leiste 190 in der zugehörigen Spindelnut 120 definiert festgelegt werden.

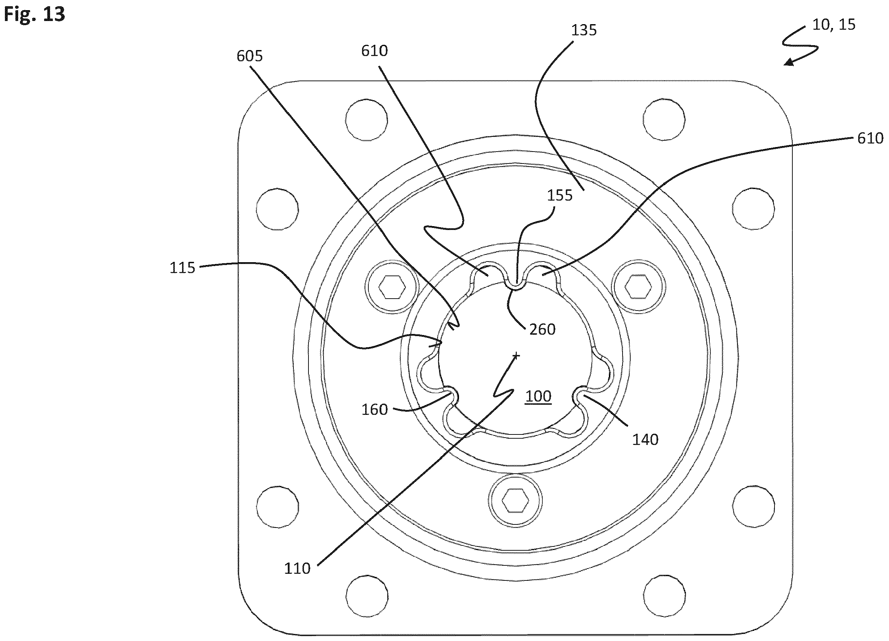

Figur 13 zeigt eine Draufsicht auf die Linearführung 15 eines Linearsystems 10 gemäß einer vierten Ausführungsform.

In Figur 13 ist aus Übersichtlichkeitsgründen im Wesentlichen nur die Linearführung 15 dargestellt. Das Linearsystem 10 ist im Wesentlichen identisch zu dem in den Figuren 1 bis 8 gezeigten Linearsystem 10 ausgebildet. Im Folgenden wird ausschließlich auf die Unterschiede des in Figur 13 gezeigten Linearsystems 10 gegenüber dem in den Figuren 1 bis 8 gezeigten Linearsystem 10 eingegangen.

Das Führungsgehäuse 135 und das erste bis dritte Leistenelement 140, 155, 160 sind einstückig und materialeinheitlich ausgebildet. Beidseitig jedes der ersten bis dritten Leistenelemente 140, 155, 160 kann eine Einbuchtung 610 ausgebildet sein. Die Einbuchtung 610 weist eine nutförmige Ausgestaltung auf und schließt sich in Umfangsrichtung direkt jeweils an das erste bis dritte Leistenelement 140, 155, 160 an. Die Einbuchtung 610 verhindert ein Verhaken der Spindel 100 an dem ersten bis dritten Leistenelement 140, 155, 160. Die Einbuchtung 610 erlaubt eine spanende Erstellung des Führungsgehäuses 135

Das Führungsgehäuse 135 weist ferner radial innenseitig eine Führungsfläche 605 auf, die sich in Umfangsrichtung jeweils zwischen zwei benachbart in Umfangsrichtung angeordneten Einbuchtungen 610 erstreckt. Die Führungsfläche 605 erstreckt sich auf einer Kreisbahn um die Achse 110. Die Führungsfläche 605 ist ausgebildet an der ersten äußeren Umfangsseite 115 der Spindel 100 zur Abstützung von Radialkräften aus der Spindel 100 anzuliegen. Von Vorteil ist hierbei, wenn der Spindelnutgrund 260 beabstandet zu dem jeweils zugeordneten ersten bis dritten Leistenelement 140, 155, 160 angeordnet ist.

Alternativ kann auch zwischen der Führungsfläche 605 und der ersten äußeren Umfangsseite 115 sowie zwischen dem ersten bis dritten Leistenelement 140, 155, 160 und dem Spindelnutgrund 260 ein Spalt angeordnet sein.

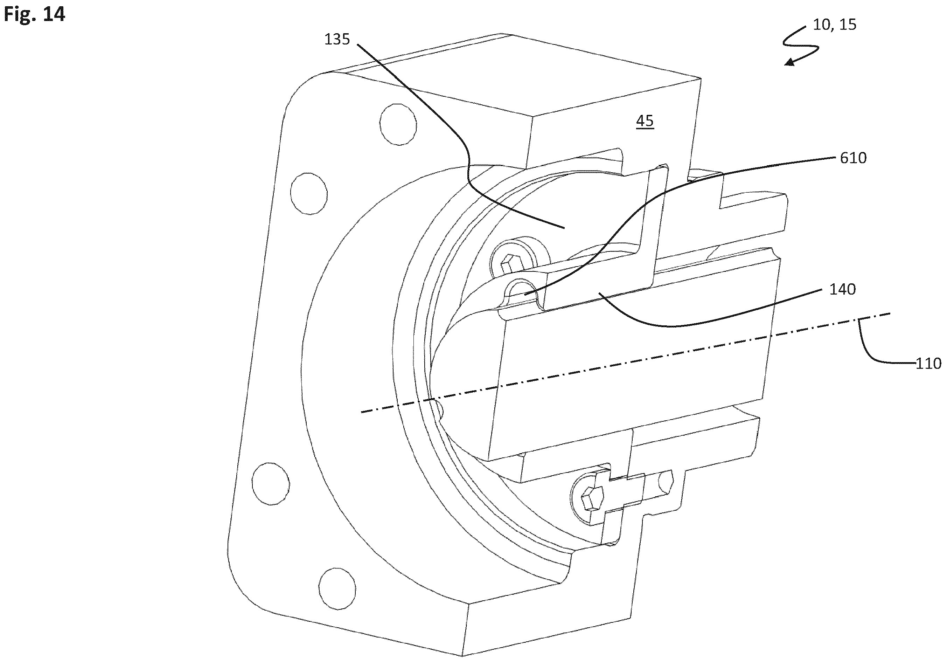

Figur 14 zeigt einen perspektivischen Längsschnitt entlang der in Figur 13 gezeigten Achse 110 durch das in Figur 13 gezeigte Linearsystem 10.

Das Führungsgehäuse 135 ist an dem Systemgehäuse 45 angeschraubt. Die Einbuchtung 610 erstreckt sich in parallel zu der Achse 110 und im Wesentlichen über eine gesamte axiale Erstreckung des Führungsgehäuses 135. Das erste bis dritte Leistenelement 140, 155, 160 weisen eine im Wesentlichen identische Breite zu dem Führungsgehäuse 135 auf. Ferner wird auf die Federelemente 145, 150 und die erste und zweite Nut 326, 330 verzichtet.

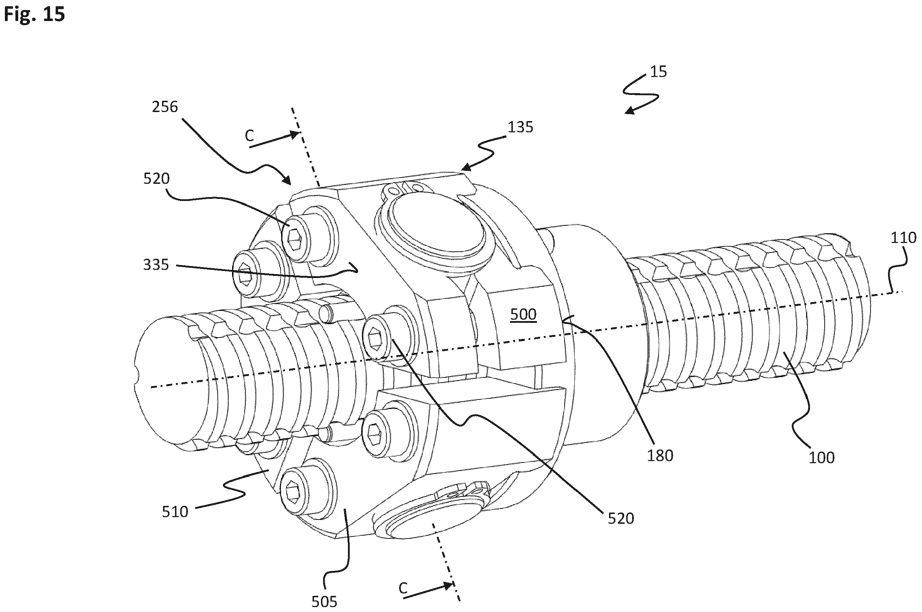

Figur 15 zeigt eine perspektivische Darstellung eines Linearsystems 10 gemäß einer fünften Ausführungsform.

Das Linearsystem 10 ist im Wesentlichen identisch zu dem in den Figuren 1 bis 8 gezeigten Linearsystem 10 ausgebildet. Im Folgenden wird ausschließlich auf die Unterschiede des in Figur 15 gezeigten Linearsystems 10 gegenüber dem in den Figuren 1 bis 8 gezeigten Linearsystem 10 eingegangen.

Das Führungsgehäuse 135 ist in der Ausführungsform mehrteilig ausgebildet. So weist das Führungsgehäuse 135 ein erstes Gehäuseelement 500 und wenigstens ein zweites Gehäuseelement 505 auf. Zusätzlich kann das Führungsgehäuse 135 auch ein in Figur 15 im Wesentlichen verdeckt angeordnetes drittes Gehäuseelement 510 aufweisen. An der ersten Stirnseite 180 liegen in montiertem Zustand des Führungsgehäuses 135 in dem Systemgehäuse 45 (vgl. Figur 1) die ersten bis dritten Gehäuseelemente 500, 505, 510 an dem Systemgehäuse 45 auf einer dem zweiten Ende 85 zugewandten Seite an.

Das erste bis dritte Gehäuseelement 500, 505, 510 sind in Umfangsrichtung jeweils beabstandet zueinander angeordnet. Das erste bis dritte Gehäuseelement 500, 505, 510 sind jeweils mit dem Befestigungsmittel 520 mit dem Systemgehäuse 45 verbunden.

Das Befestigungsmittel 520 kann jeweils beispielsweise ein Paar von Schrauben aufweisen, die parallel zu der Achse 110 verlaufen. Die Schrauben können innenseitig in das Systemgehäuse 45 eingeschraubt sein, um jeweils paarweise das erste bis dritte Gehäuseelement 500, 505, 510 zu befestigen.

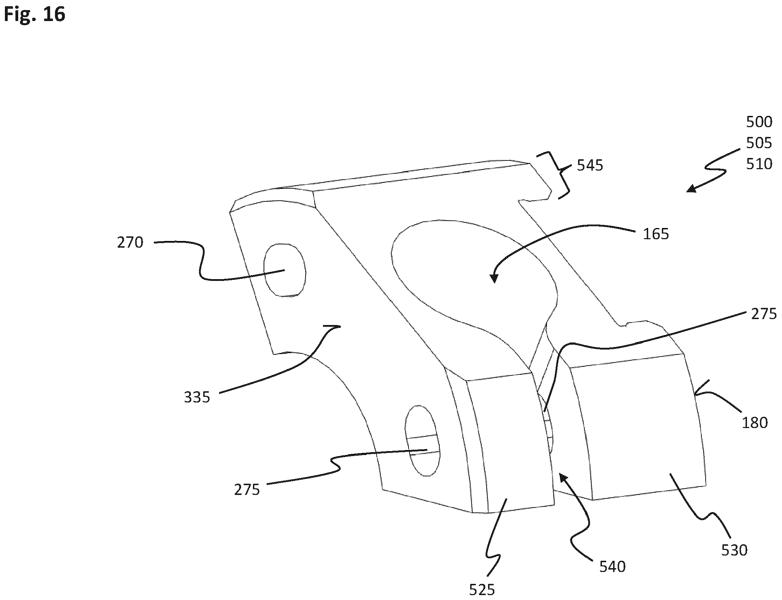

Figur 16 zeigt eine perspektivische Darstellung des ersten bis dritten Gehäuseelements 500, 505, 510.

Das erste bis dritte Gehäuseelement 500, 505, 510 sind identisch zueinander ausgebildet, sodass das im Folgenden für das erste Gehäuseelement 500 Erläuterte ebenso analog für das zweite bzw. dritte Gehäuseelement 505, 510 gilt.

Das erste Gehäuseelement 500 weist einen ersten Schenkel 525 und einen axial gegenüberliegend angeordneten zweiten Schenkel 530 auf. Der erste Schenkel 525 ist in montiertem Zustand auf einer dem ersten Ende 51 des Systemgehäuses 45 (vgl. Figur 1) zugewandten Seite angeordnet. Der zweite Schenkel 530 ist auf einer dem zweiten Ende 85 des Systemgehäuses 45 zugewandten Seite (vgl. Figur 1) angeordnet. Dabei weist der zweite Schenkel 530 die erste Stirnseite 180 auf. Die vierte Stirnseite 335 ist am ersten Schenkel 525 angeordnet.

Der erste Schenkel 525 und der zweite Schenkel 530 erstrecken sich jeweils in axial versetzt zueinander angeordneten Ebenen, die senkrecht zu der Achse 110 verlaufend ausgebildet sind. Der erste Schenkel 525 und der zweite Schenkel 530 erstrecken sich im Wesentlichen in Umfangsrichtung. Zwischen dem ersten Schenkel 525 und dem zweiten Schenkel 530 ist die erste Aufnahme 165 angeordnet. An der ersten Aufnahme 165 schließt sich ein fünfter Axialspalt 540 an, der in Umfangsrichtung verläuft. Auf einer zum fünften Axialspalt 540 in Umfangsrichtung abgewandten Seite weist das erste Gehäuseelement 500 einen Verbindungsabschnitt 545 auf. Der Verbindungsabschnitt 545 erstreckt sich über die gesamte axiale Erstreckung des ersten Gehäuseelements 500 und verbindet den ersten Schenkel 525 mit dem zweiten Schenkel 530. Der Verbindungsabschnitt 545 begrenzt die erste Aufnahme 165 in Umfangsrichtung auf einer zum fünften Axialspalt 540 abgewandten Seite.

Durch den Verbindungsabschnitt 545 erstreckt sich die erste Durchgangsöffnung 270. Auf einer dem Verbindungsabschnitt 545 abgewandten Seite in Umfangsrichtung weist das erste Gehäuseelement 500 die zweite Durchgangsöffnung 275 auf, die zweiteilig ausgebildet ist und sich sowohl durch den ersten Schenkel 525 als auch den zweiten Schenkel 530 erstreckt. Die ersten und zweiten Durchgangsöffnungen 270, 275 sind in Umfangsrichtung beidseitig der ersten Aufnahme 165 angeordnet. Die zweite Durchgangsöffnung 275 wird in der Ausführungsform durch den fünften Axialspalt 540 unterbrochen.

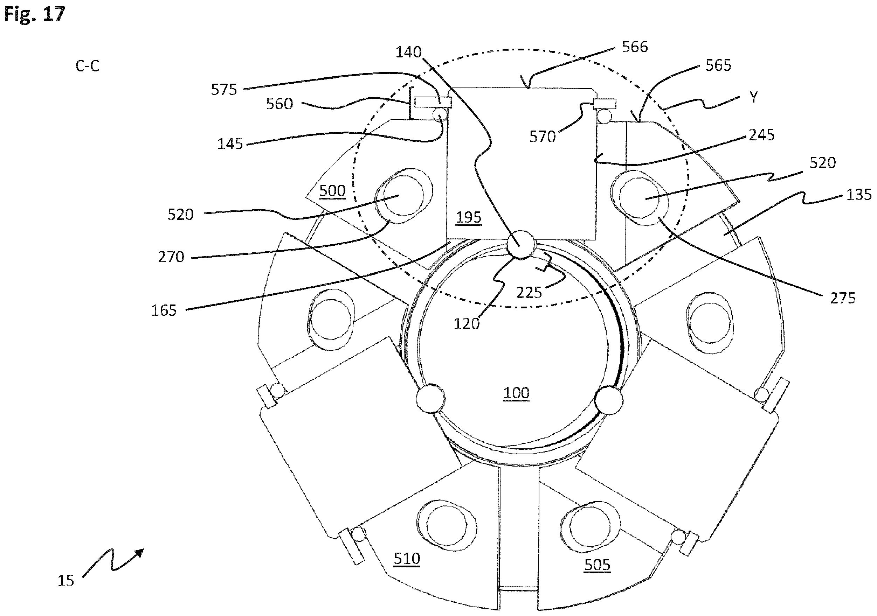

Figur 17 zeigt eine Schnittansicht entlang einer in Figur 15 gezeigten Schnittebene C-C durch das in Figur 15 gezeigte Linearsystem 10.

Der Träger 195 ist in der Ausführungsform gegenüber der in den Figuren 1 bis 8 gezeigten Ausgestaltung in radialer Richtung breiter ausgebildet. Dabei ragt der Träger 195 mit einem dritten Teilabschnitt 560 radial außenseitig über eine Außenseite 565 des jeweils ersten bis dritten Gehäuseelements 500, 505, 510 heraus. Die Trägeraußenseite 566 ist radial außenseitig zu der Außenseite 565 des ersten Gehäuseelements 500 angeordnet.

Die ersten und zweiten Durchgangsöffnungen 270, 275 können als Bohrung oder als Langlochbohrung, die in Umfangsrichtung verlaufend ausgebildet ist, ausgebildet sein. Durch die erste Durchgangsöffnung 270 und die zweite Durchgangsöffnung 275 ist das Befestigungsmittel 520 (vgl. Figur 15) gesteckt.

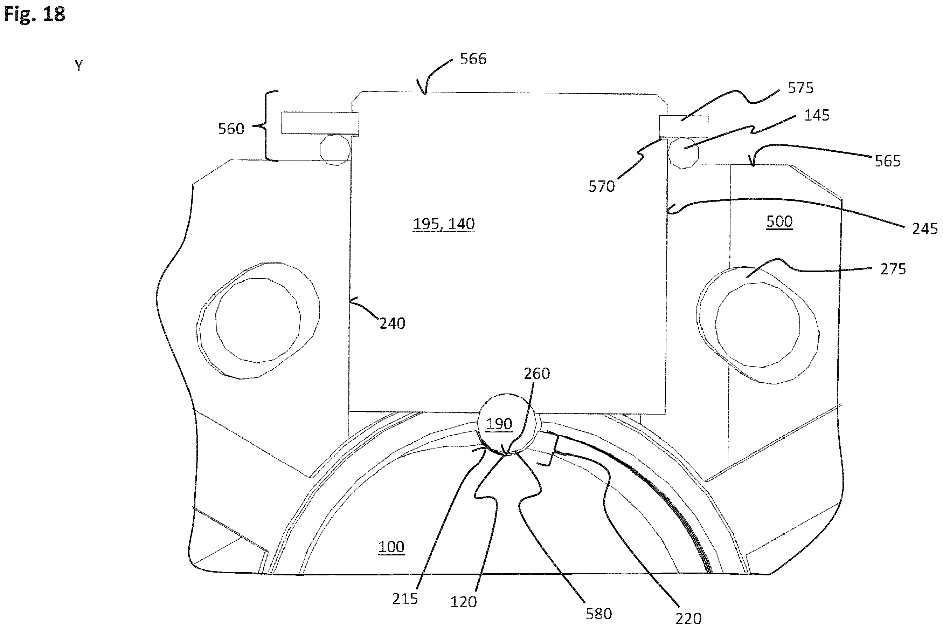

Figur 18 zeigt einen in Figur 17 markierten Ausschnitt Y der in Figur 17 gezeigten Schnittansicht entlang der in Figur 15 gezeigten Schnittebene C-C.

An dem dritten Teilabschnitt 560 weist der Träger 195 eine Sicherungsnut 570 auf, die umlaufend an dem Träger 195 ausgebildet ist. Die Sicherungsnut 570 ist in radialer Richtung zwischen der Außenseite 565 und der Trägeraußenseite 566 angeordnet.

In einer Seitenansicht auf den Träger 195 weist der Träger 195 beispielhaft eine zylinderförmige Ausgestaltung auf. In die Sicherungsnut 570 greift ein Stützring 575 ein. Der Stützring 575 ragt seitlich über die zweite äußere Umfangsseite 245 des Trägers 195 heraus und ist in radialer Richtung beabstandet zu der Außenseite 565 des ersten Gehäuseelements 500 angeordnet. In radialer Richtung ist zwischen dem Stützring 575 und der Außenseite 565 das erste Federelement 145 angeordnet. Das erste Federelement 145 umgreift den Träger 195 umfangsseitig und liegt an diesem an. Ein radialer Abstand zwischen der Außenseite 565 und dem Stützring 575 ist so gewählt, dass das erste Federelement 145 sowohl an dem Stützring 575 als auch an der Außenseite 565 anliegt.

Das erste Federelement 145 stellt sicher, dass der erste Teilabschnitt 220 der Leiste 190, der sich in Eingriff mit der ersten Spindelnut 120 befindet, beabstandet zu der ersten Spindelnut 120 angeordnet ist. Das bedeutet, dass zwischen der Gleitfläche 215 und der ersten Spindelnut 120 ein Spalt 580 angeordnet ist. Der Spalt 580 kann beispielsweise maximal 0,005mm bis 0,1 mm breit sein. Diese Ausgestaltung stellt sicher, dass ein Verklemmen der Linearführung 15 an der Spindel 100 durch den Spalt 580 verhindert wird. Ferner ist ein Verschleiß reduziert, da gegenüber der in den Figuren 1 bis 13 gezeigten Ausgestaltung die Gleitfläche 215 nur bei Einleitung des Reibmoments M_{R} in die Spindel 100 an der zugeordneten Spindelnut 120, 125, 130 anliegt.

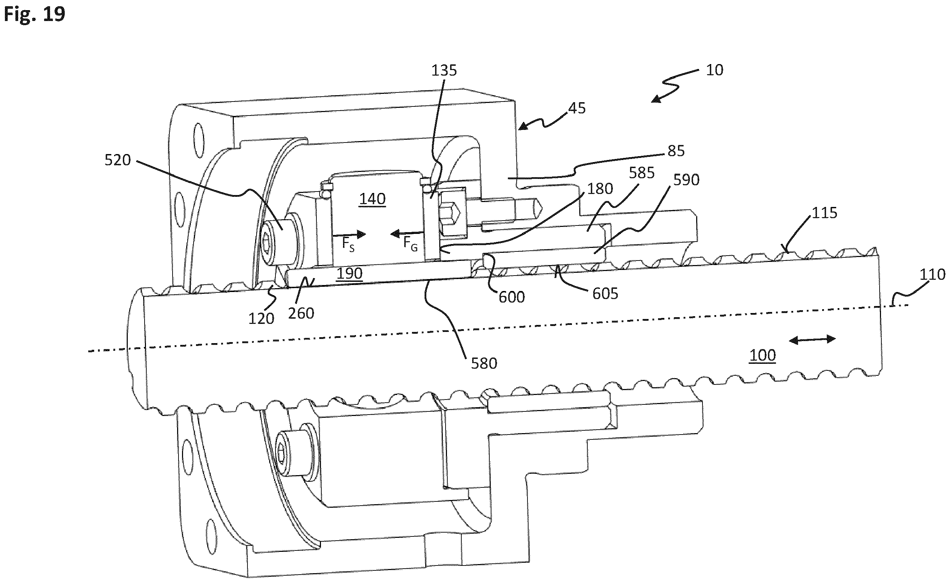

Figur 19 zeigt einen Ausschnitt eines Längsschnitts durch das in den Figuren 15 bis 16 gezeigte Linearsystem 10.

Die Linearführung 15 weist zusätzlich einen Halter 585 und eine Führungshülse 590 auf. Der Halter 585 ist in einem Halblängsschnitt L-förmig ausgebildet. Der Halter 585 ist ferner rotationssymmetrisch um die Achse 110 ausgebildet. Der Halter 585 ist innenseitig des Systemgehäuse 45 mit dem Systemgehäuse 45 verbunden.

Die Führungshülse 590 ist radial innenseitig an dem Halter 585 in einer Aussparung 600 des Halters 585 angeordnet. Die Führungshülse 590 kann beispielsweise eine Kupferlegierung aufweisen. Die Führungshülse 590 ist hohlzylindrisch ausgebildet und liegt außenseitig an dem Halter 585 an. Innenseitig weist die Führungshülse 590 die parallel zur Achse 110 verlaufende Führungsfläche 605 auf. Die Führungshülse 590 umgreift umfangsseitig die Spindel 100. Die Spindel 100 durchgreift die Führungshülse 590 unabhängig ihrer axialen Position immer vollständig.

Die Führungsfläche 605 liegt an der ersten äußeren Umfangsseite 115 der Spindel 100 an. Die Führungsfläche 605 stützt eine Radialkraft aus der Spindel 100 an dem Halter 585 ab. Um eine axiale Verschiebung der Führungshülse 590 zu verhindern, kann die Führungshülse 590 stoffschlüssig radial außenseitig mit dem Halter 585 verbunden sein. Der Halter 585 kann einen Vergütungsstahl aufweisen. Die Führungshülse 590 ist axial beabstandet zu der Leiste 190 des ersten Leistenelements 140 angeordnet.

In axialer Richtung liegt die erste Stirnseite 180 an dem Halter 585 an. Zur Befestigung und Bereitstellung der Spannkraft Fs beziehungsweise zur Gegenkraft F_{G} kann das Befestigungsmittel 520 den Halter 585 durchgreifen oder in den Halter 585 eingeschraubt sein, um so das Führungsgehäuse 135 an dem Systemgehäuse 45 zu befestigen.

Das Montageverfahren ist im Wesentlichen identisch zu dem in den Figuren 1 bis 8 erläuterten Montageverfahren ausgebildet. Im Folgenden wird ausschließlich auf die Unterschiede des Montageverfahrens zur Montage des in den Figuren 15 bis 19 gezeigten Linearsystems 10 gegenüber dem in den Figuren 1 bis 8 beschriebenen Montageverfahren eingegangen.

Im dritten Verfahrensschritt wird der Träger 195 durch die erste Aufnahme 165 von radial innen nach radial außen durchgesteckt, bis der dritte Teilabschnitt 560 über die Außenseite 565 herausragt.

Der in den Figuren 1 bis 8 beschriebene zweite Montageschritt wird auf den dritten Montageschritt folgend durchgeführt. Dabei wird das erste Federelement 145 auf den dritten Teilabschnitt 560 aufgeschoben, bis das erste Federelement 145 an der Außenseite 565 anliegt.

Danach wird der Stützring 575 in die Sicherungsnut 570 eingelegt, sodass das erste Federelement 145 sich zum einen am Stützring 575 als auch an der Außenseite 565 abstützt.

Im vierten Verfahrensschritt wird die Spindel 100 zusätzlich durch die Führungshülse 590 gesteckt.

Im fünften Verfahrensschritt wird das Befestigungsmittel 520 durch die ersten und zweiten Durchgangsöffnungen 270, 275 durchgeführt und bei Ausgestaltung des Befestigungsmittels 520 als Schrauben angezogen. Dadurch wird die erste innere Umfangsseite 240 der ersten Aufnahme 165 mit der Spannkraft F_{S}, die parallel zu der Achse 110 wirkt, an die zweite äußere Umfangsseite 245 gepresst, sodass die zweite äußere Umfangsseite 245 des Trägers 195 mit der ersten inneren Umfangsseite 240 der ersten Aufnahme 165 eine reibschlüssige Verbindung ausbildet. Dadurch ist in radialer Richtung der Träger 195 des ersten Leistenelements 140 gegenüber dem ersten Gehäuseelement 500 nicht verschiebbar und definiert positioniert. Ferner ist der Eingriff des ersten Teilabschnitts in die erste Spindelnut 120 definiert und ein Herausrutschen der Leiste 190 aus der ersten Spindelnut 120 wird verhindert.

Durch die identische Ausgestaltung des zweiten Gehäuseelements 505 und des dritten Gehäuseelements 510 wird ebenso jeweils der Eingriff der Leiste 190 des zweiten Leistenelements 155 und des dritten Leistenelements 160 in die jeweils zugeordnete zweite Spindelnut 125 bzw. dritte Spindelnut 130 definiert festgelegt.

Die in den Figuren 15 bis 19 gezeigte Ausgestaltung hat den Vorteil, dass die Linearführung 15 besonders gut einstellbar, aber gleichzeitig auch besonders einfach montierbar ist. Durch den Verzicht auf Spielfreiheit kann in der Ausführungsform die erste bis dritte Spindelnut 120, 125, 130 größere Fertigungstoleranzen aufweisen als die in den Figuren 1 bis 14 gezeigte erste bis dritte Spindelnut 120, 125, 130.

### Bezugszeichen

- 5: Fertigungsanlage
- 10: Linearsystem
- 15: Linearführung
- 20: erste Lageranordnung
- 25: Antriebseinrichtung
- 30: zweite Lageranordnung
- 35: Kontakteinrichtung
- 40: Drehgeber
- 45: Systemgehäuse
- 50: Gehäuseinnenraum
- 51: erstes Ende
- 55: Antriebsmotor
- 56: Rotor
- 60: Stator
- 65: Spindelmutter
- 70: Hohlwelle
- 75: Schraubverbindung
- 85: zweites Ende
- 90: Anschlussabschnitt
- 100: Spindel
- 105: Spindelführung
- 110: Achse
- 115: erste äußere Umfangsseite (der Spindel)
- 120: erste Spindelnut
- 125: zweite Spindelnut
- 130: dritte Spindelnut
- 135: Führungsgehäuse
- 140: erstes Leistenelement
- 145: erstes Federelement
- 150: zweites Federelement
- 155: zweites Leistenelement
- 160: drittes Leistenelement
- 165: erste Aufnahme
- 170: zweite Aufnahme
- 175: dritte Aufnahme
- 180: erste Stirnseite
- 185: Spindeldurchführung
- 190: Leiste
- 195: Träger
- 200: Befestigungsfläche
- 201: Mantelfläche
- 205: zweite Stirnseite
- 210: dritte Stirnseite
- 211: erste Seitenfläche (des Trägers)
- 212: zweite Seitenfläche (des Trägers)
- 215: Gleitfläche
- 220: erster Teilabschnitt
- 225: zweiter Teilabschnitt
- 230: Aufnahmegrund
- 235: dritte Seitenfläche
- 240: erste innere Umfangsseite (der ersten Aufnahme)
- 245: zweite äußere Umfangsseite (des Trägers)
- 250: zweite innere Umfangsseite (des ersten und/oder zweiten Federelements)
- 255: Gewindenut
- 257: Komponente
- 260: Spindelnutgrund
- 265: Gewindenutgrund
- 270: erste Durchgangsöffnung
- 275: zweite Durchgangsöffnung
- 280: dritte Durchgangsöffnung
- 285: Gehäuseaußenseite
- 290: Fixierelement
- 295: Druckplatte
- 300: erste Anlagefläche
- 305: dritte Anlagefläche
- 310: Kontaktfläche
- 315: zweite Anlagefläche
- 316: Innenseite (des Trägers)
- 320: erster Axialspalt
- 325: zweiter Axialspalt
- 326: erste Nut
- 330: zweite Nut
- 335: vierte Stirnseite
- 340: dritter Axialspalt
- 345: vierter Axialspalt
- 500: erstes Gehäuseelement
- 505: zweites Gehäuseelement
- 510: drittes Gehäuseelement
- 520: Befestigungsmittel
- 525: erster Schenkel
- 530: zweiter Schenkel
- 540: fünfter Axialspalt
- 545: Verbindungsabschnitt
- 560: dritter Teilabschnitt
- 565: Außenseite (des ersten Gehäuseelements)
- 566: Trägeraußenseite
- 570: Sicherungsnut
- 575: Stützring
- 580: Spalt
- 585: Halter
- 590: Führungshülse
- 595: weiteres Befestigungsmittel
- 600: Aussparung
- 605: Führungsfläche
- 610: Einbuchtung

## Patentansprüche

1. Linearsystem (10) für eine Fertigungsanlage (5),
- aufweisend eine Linearführung (15), eine Antriebseinrichtung (25), eine Spindelmutter (65) und eine Spindel (100),
- wobei die Spindel (100) sich entlang einer Achse (110) erstreckt und
- wobei auf der Spindel (100) die Spindelmutter (65) angeordnet ist und die Spindelmutter (65) und die Spindel (100) sich in Eingriff befinden,
- wobei die Antriebseinrichtung (25) abtriebsseitig mit der Spindelmutter (65) drehfest verbunden und ausgebildet ist, die Spindelmutter (65) zur Rotation um die Achse (110) anzutreiben,
- wobei die Spindelmutter (65) ausgebildet ist, bei Rotation um die Achse (110) die Spindel (100) parallel zu der Achse (110) zu bewegen,
- wobei die Spindel (100) an einer ersten äußeren Umfangsseite (115) eine sich parallel zu der Achse (110) erstreckende erste Spindelnut (120) aufweist,
- wobei die Linearführung (15) ein drehfest angeordnetes Führungsgehäuse (135) und ein erstes Leistenelement (140) aufweist,
- wobei das Führungsgehäuse (135) eine sich nach radial außen erstreckende erste Aufnahme (165) aufweist,
- wobei das erste Leistenelement (140) einen radial außen angeordneten Träger (195) und eine radial innen zu dem Träger (195) angeordnete und mit dem Träger (195) verbundene und sich parallel zur Achse (110) erstreckende Leiste (190) aufweist,
- wobei das erste Leistenelement (140) mit dem Träger (195) in die erste Aufnahme (165) des Führungsgehäuses (135) und mit der Leiste (190) in die erste Spindelnut (120) eingreift und ausgebildet ist, die Spindel (100) in einer Richtung parallel zu der Achse (110) zu führen,
**dadurch gekennzeichnet,**
- **dass** eine zweite äußere Umfangsseite (245) des Trägers (195) und eine erste innere Umfangsseite (240) der ersten Aufnahme (165) zumindest abschnittsweise korrespondierend zueinander ausgebildet sind,
- wobei das Führungsgehäuse (135) mittels eines Befestigungsmittels (520) in einem Systemgehäuse (45) des Linearsystems (10) befestigt ist,
- wobei das Befestigungsmittel (520) ausgebildet ist, eine Spannkraft (F_{S}) in das Führungsgehäuse (135) einzuleiten, um die erste innere Umfangsseite (240) der ersten Aufnahme (165) zumindest abschnittsweise an die zweite äußere Umfangsseite (245) anzupressen und den Träger (195) kraftschlüssig in der ersten Aufnahme (165) zu befestigen,
- wobei vorzugsweise die Spannkraft (F_{S}) parallel zu der Achse (110) ausgerichtet ist.

2. Linearsystem (10) nach Anspruch 1,
- wobei die Linearführung (15) ein erstes Federelement (145) aufweist,
- wobei das erste Leistenelement (140) eine Gleitfläche (215) auf einer der Spindel (100) zugewandten Seite aufweist,
- wobei der Träger (195) die erste Aufnahme (165) in radialer Richtung durchgreift und auf einer der Spindel (100) abgewandten Seite aus der ersten Aufnahme (165) hervorragt,
- wobei das erste Federelement (145) zwischen einer Außenseite (565) des Führungsgehäuses (135) und einer Trägeraußenseite (566) des Trägers (195) angeordnet ist,
- wobei das erste Federelement (145) ausgebildet ist, das erste Leistenelement (140) in der ersten Spindelnut (120) derart zu positionieren, dass die Gleitfläche (215) in einem vordefinierten dritten Abstand (a₃) zu einem Spindelnutgrund (260) der ersten Spindelnut (120) in der ersten Spindelnut (120) angeordnet ist.

3. Linearsystem nach Anspruch 1 oder Anspruch 2,
- wobei die Linearführung (15) eine Führungshülse (590) mit einer radial innenseitig angeordneten Führungsfläche (605) aufweist,
- wobei die Führungshülse (590) mit dem Systemgehäuse (45) gekoppelt ist und die Spindel (100) umgreift,
- wobei die Führungsfläche (605) an der ersten äußeren Umfangsseite (115) der Spindel (100) anliegt und ausgebildet ist, eine in radialer Richtung wirkende Radialkraft aus der Spindel (100) abzustützen.

4. Linearsystem (10) nach Anspruch 1,
- wobei die Linearführung (15) ein erstes Federelement (145) aufweist,
- wobei das erste Leistenelement (140) eine Gleitfläche (215) auf einer der Spindel (100) zugewandten Seite aufweist,
- wobei das erste Federelement (145) an der Leiste (190) des ersten Leistenelements (140) außenseitig anliegt,
- wobei das erste Federelement (145) ausgebildet ist, die Leiste (190) des ersten Leistenelements (140) in der ersten Spindelnut (120) derart zu halten, dass die Gleitfläche (215) an der ersten Spindelnut (120) anliegt.

5. Linearsystem (10) nach Anspruch 4,
- wobei das erste Federelement (145) ringförmig ausgebildet ist,
- wobei das erste Federelement (145) auf einer der Spindel (100) abgewandten Seite der Leiste (190) des ersten Leistenelements (140) angeordnet ist,
- wobei das erste Federelement (145) die Spindel (100) umfangsseitig umgreift und beabstandet zu der Spindel (100) angeordnet ist.

6. Linearsystem (10) nach einem der vorhergehenden Ansprüche,
- wobei die Linearführung (15) eine in der ersten Aufnahme (165) angeordnete, plattenartig ausgebildete Druckplatte (295) aufweist,
- wobei die Druckplatte (295) an einer der Achse (110) zugewandten Seite eine gekrümmt, vorzugsweise eine konkave oder konvex, ausgebildete erste Anlagefläche (300) und an einer der Achse (110) abgewandten Seite eine angeordnete dritte Anlagefläche (305) aufweist,
- wobei der Träger (195) des ersten Leistenelements (140) radial außen eine gekrümmt ausgebildete zweite Anlagefläche (315) aufweist,
- wobei die zweite Anlagefläche (315) an der ersten Anlagefläche (300), vorzugweise in einem Linienkontakt oder einem Flächenkontakt, anliegt,
- wobei das Führungsgehäuse (135) eine sich in radialer Richtung erstreckende erste Durchgangsöffnung (270) und ein Fixierelement (290) aufweist,
- wobei die erste Durchgangsöffnung (270) in der ersten Aufnahme (165) radial innenseitig mündet,
- wobei das Fixierelement (290) in radialer Richtung in der ersten Durchgangsöffnung (270) verstellbar angeordnet ist und radial innenseitig an der dritten Anlagefläche (305) der Druckplatte (295) anliegt.

7. Linearsystem (10) nach einem der vorhergehenden Ansprüche,
- wobei die Spindel (100) an der ersten äußeren Umfangsseite (115) eine sich parallel zu der Achse (110) erstreckende zweite Spindelnut (125) aufweist,
- wobei die zweite Spindelnut (125) in Umfangsrichtung versetzt zu der ersten Spindelnut (120) angeordnet ist,
- wobei die Linearführung (15) wenigstens ein zweites Leistenelement (155) und das Führungsgehäuse (135) eine zweite Aufnahme (170) aufweist,
- wobei die zweite Aufnahme (170) sich in radialer Richtung bezogen auf die Achse (110) erstreckt und in Umfangsrichtung versetzt zu der ersten Aufnahme (165) angeordnet ist,
- wobei das zweite Leistenelement (155) mit einer Leiste (190) des zweiten Leistenelements (155) in die zweite Spindelnut (125) und mit einem Träger (195) des zweiten Leistenelements (155) in die zweite Aufnahme (170) eingreift.

8. Linearsystem (10) nach Anspruch 7,
- wobei das erste Federelement (145) die Spindel (100), das erste Leistenelement (140) und das zweite Leistenelement (155) umgreift,
- wobei das erste Federelement (145) radial außen an der Leiste (190) des zweiten Leistenelements (155) anliegt und das zweite Leistenelement (155) in der zweiten Spindelnut (125) sichert.

9. Linearsystem (10) nach einem der Ansprüche 2 bis 8,
- wobei das erste Federelement (145) als O-Ring ausgebildet ist und einen elastischen Werkstoff aufweist.

10. Linearsystem (10) nach einem der Ansprüche 4 bis 9,
- wobei die Linearführung (15) wenigstens ein zweites Federelement (150) aufweist,
- wobei das zweite Federelement (150) in einer Richtung parallel zur Achse (110) versetzt zu dem ersten Federelement (145) angeordnet ist,
- wobei zwischen dem ersten Federelement (145) und dem zweiten Federelement (150) der Träger (195) des ersten Leistenelements (140) angeordnet ist,
- wobei das zweite Federelement (150) die Spindel (100) umgreift und radial außen an der Leiste (190) des ersten Leistenelements (140) anliegt,
- wobei das erste Federelement (145) und das zweite Federelement (150) gemeinsam die Leiste (190) des ersten Leistenelements (140) in der ersten Spindelnut (120) sichern.

11. Linearsystem (10) nach einem der vorhergehenden Ansprüche,
- wobei die Spindel (100) an der ersten äußeren Umfangsseite (115) eine Gewindenut (255) aufweist,
- wobei die Gewindenut (255) schraubenförmig um die Achse (110) verlaufend ausgebildet ist,
- wobei die Gewindenut (255) und die erste Spindelnut (120) sich in einem Winkel kreuzen,
- wobei der Winkel vorzugsweise 65° bis 88° aufweist.

12. Linearsystem (10) nach einem der vorhergehenden Ansprüche,
- wobei die erste Spindelnut (120) einen Spindelnutgrund (260) und die Gewindenut (255) einen Gewindenutgrund (265) aufweist,
- wobei der Gewindenutgrund (265) in radialer Richtung geringer beabstandet zu der Achse (110) angeordnet ist als der Spindelnutgrund (260).

13. Linearsystem (10) nach einem der vorhergehenden Ansprüche,
- wobei das erste Leistenelement (140) und das Führungsgehäuse (135) einstückig und materialeinheitlich ausgebildet sind.

14. Verfahren zur Montage eines Linearsystems (10),
- wobei das Linearsystem (10) nach einem der Ansprüche 1 bis 13 ausgebildet ist,
- wobei der Träger (195) in die erste Aufnahme (165) eingeführt wird,
- wobei die Leiste (190) des ersten Leistenelements (140) in die erste Spindelnut (120) eingeführt wird,
**dadurch gekennzeichnet, dass**
- das Führungsgehäuse (135) mittels des Befestigungsmittels (520) in dem Systemgehäuse (45) des Linearsystems (10) dadurch befestigt wird, dass eine Spannkraft (F_{S}) von dem Befestigungsmittel (520) in das Führungsgehäuse (135) eingeleitet wird, um die erste innere Umfangsseite (240) der ersten Aufnahme (165) zumindest abschnittsweise an die zweite äußere Umfangsseite (245) anzupressen und den Träger (190) kraftschlüssig in der ersten Aufnahme (165) zu befestigen.

## Claims

1. Linear system (10) for a production facility (5),
- having a linear guide (15), a drive device (25), a spindle nut (65) and a spindle (100),
- wherein the spindle (100) extends along an axis (110) and
- wherein the spindle nut (65) is arranged on the spindle (100), and the spindle nut (65) and the spindle (100) engage with each other,
- wherein the drive device (25) is co-rotationally connected to the spindle nut (65) on the output side and is designed to drive the spindle nut (65) in rotation around the axis (110),
- wherein the spindle nut (65) is designed to move the spindle (100) parallel to the axis (110) during rotation about the axis (110),
- wherein the spindle (100) has a first spindle groove (120) extending parallel to the axis (110) on a first outer circumferential side (115),
- wherein the linear guide (15) has a guide housing (135) fixed against rotation and has a first strip element (140),
- wherein the guide housing (135) has a first receptacle (165) extending radially outwards,
- wherein the first strip element (140) has a carrier (195) arranged radially on the outside and a strip (190) arranged radially on the inside relative to the carrier (195), connected to the carrier (195) and extending parallel to the axis (110),
- wherein the first strip element (140) engages with the carrier (195) in the first receptacle (165) of the guide housing (135) and with the strip (190) in the first spindle groove (120) and is designed to guide the spindle (100) in a direction parallel to the axis (110),
**characterized in that**
- a second outer circumferential side (245) of the carrier (195) and a first inner circumferential side (240) of the first receptacle (165) are designed to correspond to each other, at least in some sections,
- wherein the guide housing (135) is fixed in a system housing (45) of the linear system (10) by a fixing means (520),
- wherein the fixing means (520) is designed to introduce a clamping force (Fₛ) into the guide housing (135), in order to press the first inner circumferential side (240) of the first receptacle (165) onto the second outer circumferential side (245), at least in some sections, and to fix the carrier (195) in the first receptacle (165) with a force fit,
- wherein the clamping force (Fₛ) is preferably aligned parallel to the axis (110).

2. Linear system (10) according to Claim 1,
- wherein the linear guide (15) has a first spring element (145),
- wherein the first strip element (140) has a sliding surface (215) on a side facing the spindle (100),
- wherein the carrier (195) reaches through the first receptacle (165) in the radial direction and projects out of the first receptacle (165) on a side facing away from the spindle (100),
- wherein the first spring element (145) is arranged between an outer side (565) of the guide housing (135) and a carrier outer side (566) of the carrier (195),
- wherein the first spring element (145) is designed to position the first strip element (140) in the first spindle groove (120) in such a way that the sliding surface (215) is arranged in the first spindle groove (120) at a predefined third distance (a₃) from a spindle groove base (260) of the first spindle groove (120) .

3. Linear system according to Claim 1 or Claim 2,
- wherein the linear guide (15) has a guide sleeve (590) with a guide surface (605) arranged radially on the inside,
- wherein the guide sleeve (590) is coupled to the system housing (45) and engages around the spindle (100),
- wherein the guide surface (605) rests on the first outer circumferential side (115) of the spindle (100) and is designed to support a radial force from the spindle (100) acting in a radial direction.

4. Linear system (10) according to Claim 1,
- wherein the linear guide (15) has a first spring element (145),
- wherein the first strip element (140) has a sliding surface (215) on a side facing the spindle (100),
- wherein the first spring element (145) rests on the outer side of the strip (190) of the first strip element (140),
- wherein the first spring element (145) is designed to hold the strip (190) of the first strip element (140) in the first spindle groove (120) in such a way that the sliding surface (215) rests on the first spindle groove (120).

5. Linear system (10) according to Claim 4,
- wherein the first spring element (145) is ring-shaped,
- wherein the first spring element (145) is arranged on a side of the strip (190) of the first strip element (140) that faces away from the spindle (100),
- wherein the first spring element (145) engages circumferentially around the spindle (100) and is arranged at a distance from the spindle (100).

6. Linear system (10) according to one of the preceding claims,
- wherein the linear guide (15) has a plate-like pressure plate (295) arranged in the first receptacle (165),
- wherein the pressure plate (295) has a curved, preferably concave or convex, first contact surface (300) on a side facing the axis (110), and a third contact surface (305) arranged on a side facing away from the axis (110),
- wherein the carrier (195) of the first strip element (140) has a curved second contact surface (315) radially on the outside,
- wherein the second contact surface (315) rests on the first contact surface (300), preferably in a line contact or a surface contact,
- wherein the guide housing (135) has a first passage opening (270) extending in the radial direction and a fixing element (290),
- wherein the first passage opening (270) opens into the first receptacle (165) radially on the inside,
- wherein the fixing element (290) is arranged in the first passage opening (270) so as to be adjustable in the radial direction and rests radially on the inside of the third contact surface (305) of the pressure plate (295).

7. Linear system (10) according to one of the preceding claims,
- wherein the spindle (100) has a second spindle groove (125) extending parallel to the axis (110) on the first outer circumferential side (115),
- wherein the second spindle groove (125) is arranged to be offset in the circumferential direction relative to the first spindle groove (120),
- wherein the linear guide (15) has at least one second strip element (155) and the guide housing (135) has a second receptacle (170),
- wherein the second receptacle (170) extends in the radial direction relative to the axis (110) and, in the circumferential direction, is arranged to be offset relative to the first receptacle (165),
- wherein the second strip element (155) engages in the second spindle groove (125) with a strip (190) of the second strip element (155), and engages in the second receptacle (170) with a carrier (195) of the second strip element (155).

8. Linear system (10) according to Claim 7,
- wherein the first spring element (145) engages around the spindle (100), the first strip element (140) and the second strip element (155),
- wherein the first spring element (145) rests radially on the outside of the strip (190) of the second strip element (155) and secures the second strip element (155) in the second spindle groove (125).

9. Linear system (10) according to one of Claims 2 to 8,
- wherein the first spring element (145) is formed as an O-ring and includes an elastic material.

10. Linear system (10) according to one of Claims 4 to 9,
- wherein the linear guide (15) has at least one second spring element (150),
- wherein the second spring element (150) is arranged to be offset relative to the first spring element (145) in a direction parallel to the axis (110),
- wherein the carrier (195) of the first strip element (140) is arranged between the first spring element (145) and the second spring element (150),
- wherein the second spring element (150) engages around the spindle (100) and rests radially on the outside of the strip (190) of the first strip element (140),
- wherein the first spring element (145) and the second spring element (150) jointly secure the strip (190) of the first strip element (140) in the first spindle groove (120) .

11. Linear system (10) according to one of the preceding claims,
- wherein the spindle (100) has a threaded groove (255) on the first outer circumferential side (115),
- wherein the threaded groove (255) extends helically around the axis (110),
- wherein the threaded groove (255) and the first spindle groove (120) cross at an angle,
- wherein the angle is preferably 65° to 88°.

12. Linear system (10) according to one of the preceding claims,
- wherein the first spindle groove (120) has a spindle groove base (260), and the threaded groove (255) has a threaded groove base (265),
- wherein the threaded groove base (265) is arranged at a shorter distance from the axis (110) in the radial direction than the spindle groove base (260).

13. Linear system (10) according to one of the preceding claims,
- wherein the first strip element (140) and the guide housing (135) are formed in one piece and of the same material.

14. Method for installing a linear system (10),
- wherein the linear system (10) is designed according to one of Claims 1 to 13,
- wherein the carrier (195) is inserted into the first receptacle (165),
- wherein the strip (190) of the first strip element (140) is inserted into the first spindle groove (120), **characterized in that**
- the guide housing (135) is fixed in the system housing (45) of the linear system (10) by the fixing means (520) as a result of a clamping force (Fₛ) being introduced into the guide housing (135) by the fixing means (520), in order to press the first inner circumferential side (240) of the first receptacle (165) onto the second outer circumferential side (245) at least in some sections, and to fix the carrier (190) in the first receptacle (165) with a force fit.

## Revendications

1. Système linéaire (10) pour une installation de production (5),
- comprenant un guide linéaire (15), un dispositif d'entraînement (25), un écrou de broche (65) et une broche (100),
- la broche (100) s'étendant le long d'un axe (110) et
- l'écrou de broche (65) étant disposé sur la broche (100) et l'écrou de broche (65) et la broche (100) se trouvant en prise,
- le dispositif d'entraînement (25) étant relié de manière solidaire en rotation à l'écrou de broche (65) côté sortie et étant réalisé pour entraîner l'écrou de broche (65) en rotation autour de l'axe (110),
- l'écrou de broche (65) étant réalisé pour déplacer la broche (100) parallèlement à l'axe (110) lors de la rotation autour de l'axe (110),
- la broche (100) présentant, sur un premier côté circonférentiel extérieur (115), une première rainure de broche (120) s'étendant parallèlement à l'axe (110),
- le guide linéaire (15) présentant un boîtier de guidage (135) disposé de manière bloquée en rotation et un premier élément à barre (140),
- le boîtier de guidage (135) présentant un premier logement (165) s'étendant radialement vers l'extérieur,
- le premier élément à barre (140) présentant un support (195) disposé radialement à l'extérieur et une barre (190) disposée radialement à l'intérieur par rapport au support (195) et reliée au support (195) et s'étendant parallèlement à l'axe (110),
- le premier élément à barre (140) venant en prise par le support (195) dans le premier logement (165) du boîtier de guidage (135) et par la barre (190) dans la première rainure de broche (120) et étant réalisé pour guider la broche (100) dans une direction parallèle à l'axe (110),
**caractérisé en ce**
- **qu'**un deuxième côté circonférentiel extérieur (245) du support (195) et un premier côté circonférentiel intérieur (240) du premier logement (165) sont réalisés de manière à correspondre l'un à l'autre au moins dans certaines parties,
- le boîtier de guidage (135) étant fixé dans un boîtier de système (45) du système linéaire (10) par le biais d'un moyen de fixation (520),
- le moyen de fixation (520) étant réalisé pour introduire une force de serrage (Fₛ) dans le boîtier de guidage (135), afin de presser le premier côté circonférentiel intérieur (240) du premier logement (165) au moins dans certaines parties contre le deuxième côté circonférentiel extérieur (245) et de fixer le support (195) à force dans le premier logement (165),
- la force de serrage (Fₛ) étant orientée de préférence parallèlement à l'axe (110).

2. Système linéaire (10) selon la revendication 1,
- le guide linéaire (15) présentant un premier élément ressort (145),
- le premier élément à barre (140) présentant une surface de glissement (215) sur un côté tourné vers la broche (100),
- le support (195) venant en prise à travers le premier logement (165) dans la direction radiale et faisant saillie hors du premier logement (165) sur un côté opposé à la broche (100),
- le premier élément ressort (145) étant disposé entre un côté extérieur (565) du boîtier de guidage (135) et un côté extérieur (566) du support (195),
- le premier élément ressort (145) étant réalisé pour positionner le premier élément à barre (140) dans la première rainure de broche (120) de telle sorte que la surface de glissement (215) soit disposée à une troisième distance (a₃) prédéfinie d'un fond (260) de la première rainure de broche (120) dans la première rainure de broche (120).

3. Système linéaire selon la revendication 1 ou la revendication 2,
- le guide linéaire (15) présentant une douille de guidage (590) dotée d'une surface de guidage (605) disposée radialement du côté intérieur,
- la douille de guidage (590) étant accouplée au boîtier de système (45) et enveloppant la broche (100),
- la surface de guidage (605) s'appuyant sur le premier côté circonférentiel extérieur (115) de la broche (100) et étant réalisée pour supporter une force radiale, agissant dans la direction radiale, provenant de la broche (100).

4. Système linéaire (10) selon la revendication 1,
- le guide linéaire (15) présentant un premier élément ressort (145),
- le premier élément à barre (140) présentant une surface de glissement (215) sur un côté tourné vers la broche (100),
- le premier élément ressort (145) s'appuyant, du côté extérieur, sur la barre (190) du premier élément à barre (140),
- le premier élément ressort (145) étant réalisé pour retenir la barre (190) du premier élément à barre (140) dans la première rainure de broche (120), de telle sorte que la surface de glissement (215) s'appuie sur la première rainure de broche (120).

5. Système linéaire (10) selon la revendication 4,
- le premier élément ressort (145) étant annulaire,
- le premier élément ressort (145) étant disposé sur un côté de la barre (190) du premier élément à barre (140), lequel côté est opposé à la broche (100),
- le premier élément ressort (145) enveloppant la broche (100) du côté circonférentiel et étant disposé à distance de la broche (100).

6. Système linéaire (10) selon l'une des revendications précédentes,
- le guide linéaire (15) présentant une plaque de pression (295) réalisée en forme de plaque et disposée dans le premier logement (165),
- la plaque de pression (295) présentant, sur un côté tourné vers l'axe (110), une première surface d'appui (300) réalisée de manière incurvée, de préférence concave ou convexe et, sur un côté opposé à l'axe (110), une troisième surface d'appui (305) disposée,
- le support (195) du premier élément à barre (140) présentant, radialement à l'extérieur, une deuxième surface d'appui (315) réalisée de manière incurvée,
- la deuxième surface d'appui (315) s'appuyant sur la première surface d'appui (300), de préférence par un contact linéaire ou un contact superficiel,
- le boîtier de guidage (135) présentant une première ouverture traversante (270) s'étendant dans la direction radiale et un élément de fixation (290),
- la première ouverture traversante (270) débouchant radialement du côté intérieur dans le premier logement (165),
- l'élément de fixation (290) étant disposé de manière déplaçable dans la direction radiale dans la première ouverture traversante (270) et s'appuyant radialement du côté intérieur sur la troisième surface d'appui (305) de la plaque de pression (295).

7. Système linéaire (10) selon l'une des revendications précédentes,
- la broche (100) présentant, sur le premier côté circonférentiel extérieur (115), une deuxième rainure de broche (125) s'étendant parallèlement à l'axe (110),
- la deuxième rainure de broche (125) étant disposée de manière décalée par rapport à la première rainure de broche (120) dans la direction circonférentielle,
- le guide linéaire (15) présentant au moins un deuxième élément à barre (155) et le boîtier de guidage (135) présentant un deuxième logement (170),
- le deuxième logement (170) s'étendant dans la direction radiale par rapport à l'axe (110) et étant disposé de manière décalée par rapport au premier logement (165) dans la direction circonférentielle,
- le deuxième élément à barre (155) venant en prise par une barre (190) du deuxième élément à barre (155) dans la deuxième rainure de broche (125) et par un support (195) du deuxième élément à barre (155) dans le deuxième logement (170).

8. Système linéaire (10) selon la revendication 7,
- le premier élément ressort (145) enveloppant la broche (100), le premier élément à barre (140) et le deuxième élément à barre (155),
- le premier élément ressort (145) s'appuyant radialement à l'extérieur sur la barre (190) du deuxième élément à barre (155) et bloquant le deuxième élément à barre (155) dans la deuxième rainure de broche (125).

9. Système linéaire (10) selon l'une des revendications 2 à 8,
- le premier élément ressort (145) étant réalisé sous forme de joint torique et présentant une matière élastique.

10. Système linéaire (10) selon l'une des revendications 4 à 9,
- le guide linéaire (15) présentant au moins un deuxième élément ressort (150),
- le deuxième élément ressort (150) étant disposé de manière décalée par rapport au premier ressort (145) dans une direction parallèle à l'axe (110),
- le support (195) du premier élément à barre (140) étant disposé entre le premier élément ressort (145) et le deuxième élément ressort (150),
- le deuxième élément ressort (150) enveloppant la broche (100) et s'appuyant radialement à l'extérieur sur la barre (190) du premier élément à barre (140),
- le premier élément ressort (145) et le deuxième élément ressort (150) bloquant ensemble la barre (190) du premier élément à barre (140) dans la première rainure de broche (120).

11. Système linéaire (10) selon l'une des revendications précédentes,
- la broche (100) présentant, sur le premier côté circonférentiel extérieur (115), une rainure filetée (255),
- la rainure filetée (255) étant réalisée de manière à s'étendre en forme d'hélice autour de l'axe (110),
- la rainure filetée (255) et la première rainure de broche (120) se croisant suivant un angle,
- l'angle étant de préférence de 65° à 88°.

12. Système linéaire (10) selon l'une des revendications précédentes,
- la première rainure de broche (120) présentant un fond de rainure de broche (260) et la rainure filetée (255) présentant un fond de rainure filetée (265),
- le fond de rainure filetée (265) étant disposé de manière plus espacée de l'axe (110) que le fond de rainure de broche (260) dans la direction radiale.

13. Système linéaire (10) selon l'une des revendications précédentes,
- le premier élément à barre (140) et le boîtier de guidage (135) étant réalisés d'une seule pièce et en le même matériau.

14. Procédé de montage d'un système linéaire (10),
- le système linéaire (10) étant réalisé selon l'une des revendications 1 à 13,
- le support (195) étant inséré dans le premier logement (165),
- la barre (190) du premier élément à barre (140) étant insérée dans la première rainure de broche (120), **caractérisé en ce que**
- le boîtier de guidage (135) est fixé dans le boîtier de système (45) du système linéaire (10) par le biais du moyen de fixation (520), par le fait qu'une force de serrage (F_{S}) est introduite dans le boîtier de guidage (135) par le moyen de fixation (520), afin de presser le premier côté circonférentiel intérieur (240) du premier logement (165) au moins dans certaines parties contre le deuxième côté circonférentiel extérieur (245) et de fixer le support (190) à force dans le premier logement (165).
